# FASCICULE DE BREVET EUROPEEN

(11) **EP 3 809 061 B1**
(45) Date de publication et mention de la délivrance du brevet: **07.02.2024**
(21) Numéro de dépôt: 20201612.7
(22) Date de dépôt: 13.10.2020
(51) Int. Cl.: F24H 4/04, F24H 9/12, F24F 1/02, F28D 7/12, F24F 13/02, F28D 21/00

(54) **EQUIPEMENT POUR RACCORDER À L'AIR EXTÉRIEUR AU MOINS UN APPAREIL THERMODYNAMIQUE À AIR**
AUSRÜSTUNG ZUM ANSCHLIESSEN AN DIE AUSSENLUFT MINDESTENS EINES THERMODYNAMISCHEN GERÄTS, DAS MIT LUFT FUNKTIONIERT
DEVICE FOR CONNECTING TO EXTERNAL AIR AT LEAST ONE THERMODYNAMIC AIR DEVICE

(30) Priorité: 14.10.2019 FR 1911418
(43) Date de publication de la demande: 21.04.2021
(73) Titulaire: Poujoulat, 79360 Granzay Gript (FR)
(72) Inventeur: BALOGE, Jean-Charles, 79370 AIGONNAY (FR); PEIGNE, Pierre, 17139 DOMPIERRE SUR MER (FR); VOVARD, Guillaume, 79000 NIORT (FR); BUCHER, Vianney, 79500 SAINT-VINCENT LA CHÂTRE (FR)
(74) Mandataire: Jacobacci Coralis Harle

(56) Documents cités:
- EP-A1- 2 530 380
- DE-U1-202011 004 430
- FR-A1- 2 954 815
- FR-A1- 3 057 651
- GB-A- 2 522 723

## Description

### Domaine technique de l'invention

La présente invention concerne le domaine technique général des installations de production d'eau chaude sanitaire ou d'air chaud/froid dans une structure d'habitation.

Elle concerne plus particulièrement un équipement pour raccorder à l'air extérieur au moins un appareil thermodynamique à air, type chauffe-eau thermodynamique (CET) ou pompe à chaleur (PAC).

### Etat de la technique

Le développement des appareils thermodynamiques (pompe à chaleur (PAC), chauffe-eau thermodynamique (CET)) est en plein essor, notamment pour se substituer aux chaudières à combustibles fossiles.

Par exemple les documents FR-3 057 651, FR-2 954 815 ou encore DE 20 2011 004430 décrivent des installations individuelles ou collectives permettant de raccorder des chauffe-eaux thermodynamiques (CET) à l'air extérieur.

Ces documents visent notamment tout type d'installation intégrant au moins un appareil de production d'eau chaude à fonctionnement thermodynamique sur l'air, ainsi que les conduits d'admission et d'évacuation d'air, en configuration séparée ou concentrique. Leur enseignement est relativement général et aucune information n'est apportée sur le caractère modulaire de ces conduits, ni sur la spécificité des emboîtements de ces conduits en relation avec la nécessité de récupérer les condensats de manière optimale.

Pour les chaudières à combustibles fossiles, il existe depuis plusieurs années déjà des conduits concentriques modulaires, assurant à la fois l'évacuation des produits de combustion et l'admission de l'air de combustion.

Cependant ces conduits concentriques modulaires pour chaudières ne sont pas adaptés pour équiper les appareils thermodynamiques à air, car ils ne permettent pas de traiter correctement l'évacuation de l'eau condensée pouvant s'y former.

Il existe donc un besoin de proposer des solutions de type conduit concentrique modulaire permettant la connexion d'un ou plusieurs appareils thermodynamiques à air exclusivement, en répondant à leurs contraintes spécifiques, notamment au niveau de la gestion des flux d'air entrant et sortant, ainsi qu'au niveau de la gestion de l'eau condensée.

### Présentation de l'invention

Pour répondre à cette problématique de l'état de la technique, la présente invention propose à la revendication 1
un équipement pour raccorder à l'air extérieur un appareil thermodynamique à air, type chauffe-eau thermodynamique (CET) ou pompe à chaleur (PAC) par exemple, équipant une structure d'habitation, l'équipement comprenant un système de canalisations concentriques, ledit appareil thermodynamique à air comprenant une ouverture de refoulement d'air et une ouverture d'amenée d'air, laquelle ouverture d'amenée d'air est concentrique à ladite ouverture de refoulement d'air et située autour de cette dernière,
lesquelles ouverture d'amenée d'air et ouverture de refoulement d'air dudit appareil thermodynamique à air sont raccordables à l'air extérieur par le biais dudit système de canalisations concentriques, ce système de canalisations concentriques comprenant une tubulure intérieure en communication avec l'air extérieur par un orifice de sortie d'air et configurée pour communiquer avec ladite ouverture de refoulement d'air dudit appareil thermodynamique à air, et une tubulure extérieure en communication avec l'air extérieur par un orifice d'entrée d'air et configurée pour communiquer avec ladite ouverture d'amenée d'air dudit appareil thermodynamique à air,
lequel système de canalisations concentriques comprend :
   - une partie verticale de système de canalisations concentriques, dont l'extrémité supérieure comprend un chapeau terminal situé à l'extérieur de la structure d'habitation, lequel chapeau terminal comprend lesdits orifice de sortie d'air et orifice d'entrée d'air, et
   - une éventuelle partie transversale de système de canalisations concentriques qui relie ledit appareil thermodynamique à air à ladite partie verticale de système de canalisations concentriques, laquelle partie transversale de système de canalisations concentriques présente une pente descendante depuis l'appareil thermodynamique à air en direction de ladite partie verticale de système de canalisations concentriques,
ladite partie verticale de système de canalisations concentriques est constituée d'une juxtaposition de tronçons de partie verticale de système de canalisations concentriques,
ledit équipement étant caractérisé en ce que les tronçons de partie verticale de système de canalisations concentriques comprennent des parties d'extrémité de type mâle/femelle pour assurer leur raccordement par emboitement, l'extrémité inférieure dudit système de canalisations concentriques comprenant un dispositif de récupération de liquide,
en ce que ladite éventuelle partie transversale de système de canalisations concentriques comprend au moins un tronçon de raccordement adapté pour se raccorder par emboitement à ladite partie verticale de système de canalisations concentriques,
et en ce que :
   - le tronçon de tubulure intérieure desdits tronçons de partie verticale de système de canalisations concentriques et le tronçon de tubulure intérieure dudit au moins un tronçon de raccordement de ladite éventuelle partie transversale de système de canalisations concentriques comportent une extrémité située au point le plus haut, dite extrémité supérieure, qui est de type mâle, et une extrémité située au point le plus bas, dite extrémité inférieure, qui est de type femelle, et
   - le tronçon de tubulure extérieure desdits tronçons de partie verticale de système de canalisations concentriques et le tronçon de tubulure extérieure dudit au moins un tronçon de raccordement de ladite éventuelle partie transversale de système de canalisations concentriques comportent une extrémité située au point le plus haut, dite extrémité supérieure, qui est de type femelle, et une extrémité située au point le plus bas, dite extrémité inférieure, qui est de type mâle.

Les particularités de raccordement mâles/femelles des tronçons de partie verticale et des éventuels tronçons de raccordement, en association avec le dispositif de récupération de liquide prévu à l'extrémité inférieure de la partie verticale, permettent une gestion optimale des flux gazeux et de l'eau formée par la condensation à l'intérieur des canalisations concentriques.

Un mode de réalisation avantageux de l'invention prévoit un équipement selon la revendication 1 pour raccorder à l'air extérieur une pluralité d'appareils thermodynamiques à air, type chauffe-eau thermodynamique (CET) ou pompe à chaleur (PAC), par exemple, lesquels appareils thermodynamiques à air sont disposés sur plusieurs niveaux, chacun dans une pièce d'une structure d'habitation en forme d'un immeuble collectif qui comprend une gaine technique verticale, l'équipement comprenant un système de canalisations concentriques, chacun desdits appareils thermodynamiques à air comprenant une ouverture de refoulement d'air et une ouverture d'amenée d'air, laquelle ouverture d'amenée d'air est concentrique à ladite ouverture de refoulement d'air et située autour de cette dernière,
lesquelles ouverture d'amenée d'air et ouverture de refoulement d'air des appareils thermodynamiques à air sont raccordables à l'air extérieur par le biais dudit système de canalisations concentriques, ce système de canalisations concentriques comprenant une tubulure intérieure en communication avec l'air extérieur par un orifice de sortie d'air et configurée pour communiquer avec lesdites ouvertures de refoulement d'air des appareils thermodynamiques à air, et une tubulure extérieure en communication avec l'air extérieur par un orifice d'entrée d'air et configurée pour communiquer avec lesdites ouvertures d'amenée d'air des appareils thermodynamiques à air,
lequel système de canalisations concentriques comprend :
   - une partie verticale de système de canalisations concentriques adaptée pour être placée au moins en partie à l'intérieur de ladite gaine technique verticale, l'extrémité supérieure de ladite partie verticale de système de canalisations concentriques comprenant un chapeau terminal adapté pour être situé à l'extérieur de ladite gaine technique, lequel chapeau terminal comprend lesdits orifice de sortie d'air et orifice d'entrée d'air, et
   - des parties transversales de système de canalisations concentriques reliant chacun desdits appareils thermodynamiques à air à ladite partie verticale de système de canalisations concentriques, lesquelles parties transversales de système de canalisations concentriques présentent une pente descendante depuis l'appareil thermodynamique à air en direction de ladite partie verticale de système de canalisations concentriques,
ladite partie verticale de système de canalisations concentriques est constituée d'une juxtaposition de tronçons de partie verticale de système de canalisations concentriques comprenant des parties d'extrémité de type mâle/femelle pour assurer leur raccordement par emboitement, son extrémité inférieure comprenant un dispositif de récupération de liquide,
lesdites parties transversales de système de canalisations concentriques comprennent chacune (i) un piquage de raccordement solidaire d'un tronçon de partie verticale de système de canalisations concentriques, lequel piquage de raccordement est centré sur un axe en pente ascendante depuis ledit tronçon de partie verticale de système de canalisations concentriques, et (ii) au moins un tronçon de raccordement adapté pour raccorder par emboitement ledit piquage de raccordement audit appareil thermodynamique à air, et :
   - le tronçon de tubulure intérieure desdits tronçons de partie verticale de système de canalisations concentriques et le tronçon de tubulure intérieure desdits tronçons de raccordement desdites parties transversales de système de canalisations concentriques comportent une extrémité située au point le plus haut, dite extrémité supérieure, qui est de type mâle, et une extrémité située au point le plus bas, dite extrémité inférieure, qui est de type femelle, et
   - le tronçon de tubulure extérieure desdits tronçons de partie verticale de système de canalisations concentriques et le tronçon de tubulure extérieure desdits tronçons de raccordement desdites parties transversales de système de canalisations concentriques comportent une extrémité située au point le plus haut, dite extrémité supérieure, qui est de type femelle, et une extrémité située au point le plus bas, dite extrémité inférieure, qui est de type mâle.

D'autres caractéristiques non limitatives et avantageuses de l'équipement conforme à l'invention, prises individuellement ou selon toutes les combinaisons techniquement possibles, sont les suivantes :
- le tronçon de tubulure intérieure desdits tronçons de partie verticale de système de canalisations concentriques, ainsi qu'éventuellement le tronçon de tubulure intérieure desdits tronçons de raccordement desdites parties transversales de système de canalisations concentriques, sont réalisées en une matière ayant une conductivité thermique peu élevée, par exemple une matière plastique type polypropylène,
   le tronçon de tubulure extérieure desdits tronçons de partie verticale de système de canalisations concentriques, ainsi qu'éventuellement le tronçon de tubulure extérieure desdits tronçons de raccordement desdites parties transversales de système de canalisations concentriques, sont réalisées en métal, par exemple en acier inoxydable, et
   des éléments centreurs assurent l'écartement entre lesdits tronçons de tubulures intérieures et extérieures, lesquels éléments centreurs comprennent un collier de serrage pour leur serrage autour dudit tronçon de tubulure intérieure, lequel collier de serrage est muni d'au moins deux organes entretoise en métal aptes à être fixés par soudage sur ledit tronçon de tubulure extérieure.
- l'équipement est raccordable à au moins un appareil thermodynamique à air comprenant un tronçon de conduit intérieur prolongeant son ouverture de refoulement d'air, et un tronçon de conduit extérieur prolongeant son ouverture d'amenée d'air, muni d'une extrémité libre, et ledit tronçon de tubulure extérieure dudit au moins un tronçon de raccordement de la partie transversale de système de canalisations concentriques est raccordable à ladite extrémité libre du tronçon de conduit extérieur dudit au moins un appareil thermodynamique à air par l'intermédiaire d'une pièce adaptateur.
- ladite pièce adaptateur comprend une virole dont le diamètre extérieur correspond, au jeu près, au diamètre intérieur de la tubulure extérieure dudit tronçon de raccordement et au diamètre intérieur du tronçon de conduit extérieur de l'appareil thermodynamique à air.
- ladite pièce adaptateur comprend au moins un organe saillant s'étendant en saillie sur la surface externe de ladite virole, et ledit tronçon de conduit extérieur de l'appareil thermodynamique à air comprend une fente longitudinale qui s'étend selon une génératrice parallèle à son axe, à partir de son extrémité libre, laquelle fente longitudinale est adaptée au passage dudit élément saillant de ladite pièce adaptateur, lors de l'assemblage par emboitement dudit conduit extérieur de l'appareil thermodynamique à air et de ladite pièce adaptateur.
- ledit au moins un organe saillant est interposé entre la surface externe de la virole de la pièce adaptateur et une couronne externe concentrique, l'espace entre ladite surface externe de la virole de la pièce adaptateur et ladite couronne externe concentrique étant adapté au passage dudit tronçon de conduit extérieur de l'appareil thermodynamique à air ; en outre, un collier de serrage est ménagé sur ladite couronne externe concentrique pour permettre le serrage dudit tronçon de conduit extérieur de l'appareil thermodynamique à air contre ladite virole de la pièce adaptateur.
- ladite pièce adaptateur comprend un bouchon amovible apte à obturer l'ouverture de la partie transversale du système de canalisations concentriques qui est située du côté de l'appareil thermodynamique à air.

Dans ce cadre, de préférence, ledit bouchon amovible est fixé sur ladite couronne externe concentrique de la pièce adaptateur par l'intermédiaire d'un lien souple.
- le ou l'un des tronçons de raccordement du système de canalisations concentriques est adapté pour passer au travers d'une ouverture d'une paroi de cloisonnement délimitant la pièce dans laquelle est disposé l'appareil thermodynamique à air, lequel tronçon de raccordement comprend une partie d'extrémité apte à être découpée, de sorte que sa tubulure interne déborde de la face interne de ladite paroi de cloisonnement située du côté de l'appareil thermodynamique à air, d'une longueur adaptée à l'emboitement d'un tronçon de conduit intérieur prolongeant l'ouverture de refoulement d'air de l'appareil thermodynamique à air, et de sorte que sa tubulure externe soit située en léger débordement de ladite face interne de la paroi de cloisonnement, une couronne de finition en forme de rosace mobile par coulissement étant montée sur ladite tubulure externe pour obturer le pourtour de ladite ouverture de paroi.
- ledit dispositif de récupération de liquide comprend :
   (i) une virole intérieure cylindrique adaptée pour venir s'emboiter à l'extrémité inférieure de la tubulure intérieure de la partie verticale du système de canalisations concentriques, laquelle virole intérieure est munie d'une paroi d'obturation comprenant un orifice de passage de liquide associé à une bille d'obturation amovible, et
   (ii) une virole extérieure cylindrique adaptée pour venir s'emboiter à l'extrémité inférieure de la tubulure extérieure de la partie verticale du système de canalisations concentriques, laquelle virole extérieure est munie d'une paroi d'obturation munie d'un orifice de passage de liquide, lequel orifice de passage de liquide se prolonge par un dispositif de collecte, par exemple en forme de siphon.
- ladite paroi d'obturation de la virole intérieure et ladite paroi d'obturation de la virole extérieure ont une forme conique dont le sommet, orienté vers le bas, comporte l'orifice de passage de liquide associé.
- ladite paroi d'obturation de la virole intérieure comporte une structure de cloisonnement pour la bille d'obturation associée, laquelle structure de cloisonnement est munie d'ouvertures ou de perforations.
- ledit chapeau terminal comprend :
   (i) un tube prolongateur plein muni d'une partie d'emboitement pour son emboitement sur l'extrémité supérieure de la tubulure intérieure de la partie verticale du système de canalisations concentriques,
   (ii) un organe tubulaire prolongateur disposé de manière concentrique autour dudit tube prolongateur, lequel organe tubulaire prolongateur est muni d'une partie d'emboitement pour son emboitement sur l'extrémité supérieure de la tubulure extérieure de la partie verticale du système de canalisations concentriques,
      lequel organe tubulaire prolongateur s'étend jusqu'à un niveau supérieur par rapport à l'extrémité libre dudit tube prolongateur, l'extrémité supérieure dudit organe tubulaire prolongateur étant équipée d'un plateau supérieur horizontal de recouvrement, et un plateau intermédiaire horizontal étant situé sous l'extrémité supérieure dudit tube prolongateur, lequel plateau intermédiaire vient cloisonner l'espace entre ledit tube prolongateur et ledit organe tubulaire prolongateur,
      lequel organe tubulaire prolongateur comporte (i) une pluralité d'ouvertures ménagées sous ledit plateau intermédiaire pour assurer l'amenée d'air vers les appareils thermodynamiques à air, et (ii) une pluralité d'ouvertures ménagées au dessus dudit plateau intermédiaire pour assurer l'évacuation vers l'extérieur de l'air provenant des appareils thermodynamiques à air.
- ledit plateau supérieur et ledit plateau intermédiaire sont en forme de disque dont le diamètre est supérieur au diamètre de l'organe tubulaire prolongateur.

L'invention concerne encore une installation de production d'eau chaude ou d'air chaud/froid pour une structure d'habitation, comprenant a) au moins un appareil thermodynamique à air, type chauffe-eau thermodynamique (CET) ou pompe à chaleur (PAC), et b) un équipement pour raccorder à l'air extérieur ledit au moins un appareil thermodynamique à air, tel que défini ci-dessus.

Bien entendu, les différentes caractéristiques, variantes et formes de réalisation de l'invention peuvent être associées les unes avec les autres selon diverses combinaisons dans le cadre de l'invention qui est définie par les revendications.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique en perspective partielle, d'une installation de production d'eau chaude selon l'invention, pour une structure d'habitation en forme d'immeuble collectif ;
[Fig. 2] est une vue schématique en coupe de la partie verticale du système de canalisations concentriques de l'installation illustrée figure 1, en position éclatée des éléments la constituant ;
[Fig. 3] est une vue en perspective d'un élément centreur assurant l'écartement entre les tubulures intérieures et extérieures du système de canalisations concentriques de l'installation selon l'invention ;
[Fig. 4] est une vue schématique en coupe d'une partie transversale du système de canalisations concentriques de l'installation illustrée figure 1, en position partiellement éclatée des éléments la constituant, placée en regard d'un appareil thermodynamique à air ;
[Fig. 5] est une vue schématique en coupe d'une partie de la partie transversale du système de canalisations concentriques illustrée sur la figure 4, ici en position assemblée des éléments la constituant ;
[Fig. 6] est une vue agrandie d'une extrémité de la partie transversale du système de canalisations concentriques illustrée sur la figure 5 ;
[Fig. 7] est une vue en perspective tronquée d'une partie de la partie transversale du système de canalisations concentriques illustrée sur la figure 4 ;
[Fig. 8] est une vue isolée en coupe de l'un des tronçons de la partie verticale du système de canalisations concentriques de l'installation selon l'invention ;
[Fig. 9] est une vue de dessus du tronçon de canalisation illustré sur la figue 8 ;
[Fig. 10] est une vue isolée en coupe d'un autre tronçon de la partie verticale du système de canalisations concentriques de l'installation selon l'invention ;
[Fig. 11] est une vue schématique en coupe du dispositif de récupération de liquide équipant la partie verticale du système de canalisations concentriques de l'installation selon l'invention ;
[Fig. 12] est une vue de dessus du dispositif de récupération de liquide illustré sur la figure 11 ;
[Fig. 13] est une vue de côté du chapeau terminal équipant la partie verticale du système de canalisations concentriques de l'installation selon l'invention ;
[Fig. 14] est une vue de dessus du chapeau terminal illustré sur la figure 13 ;
[Fig. 15] est une vue en coupe du chapeau terminal, selon le plan de coupe 15-15 de la figure 14.

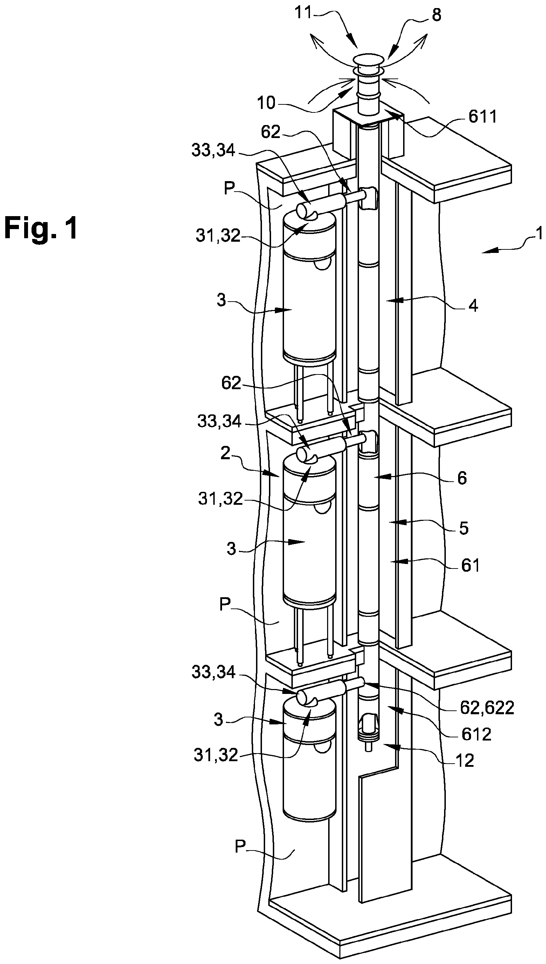

La figure 1 correspond à une vue schématique en perspective tronquée d'une partie d'une structure d'habitation 1 en forme d'un immeuble collectif, équipé d'une installation de chauffage 2 comprenant :
   - une pluralité d'appareils thermodynamiques à air 3, type chauffe-eau thermodynamique (CET) ou pompe à chaleur (PAC), et
   - un équipement 4 pour raccorder à l'air extérieur lesdits appareils thermodynamiques à air 3.

Cette structure d'habitation 1 comprend une pluralité d'habitations réparties sur plusieurs étages, chaque habitation comprenant une pièce P dans laquelle se situe un appareil thermodynamique à air 3, type chauffe-eau thermodynamique (CET) ou pompe à chaleur (PAC), pour la production d'eau chaude sanitaire, ou d'air chaud/froid.

Cette structure d'habitation 1 comporte encore intérieurement une gaine technique 5 qui s'étend selon un axe longitudinal vertical ou sensiblement vertical, pour la réception d'une partie de l'équipement 4 pour raccorder à l'air extérieur lesdits appareils thermodynamiques à air 3.

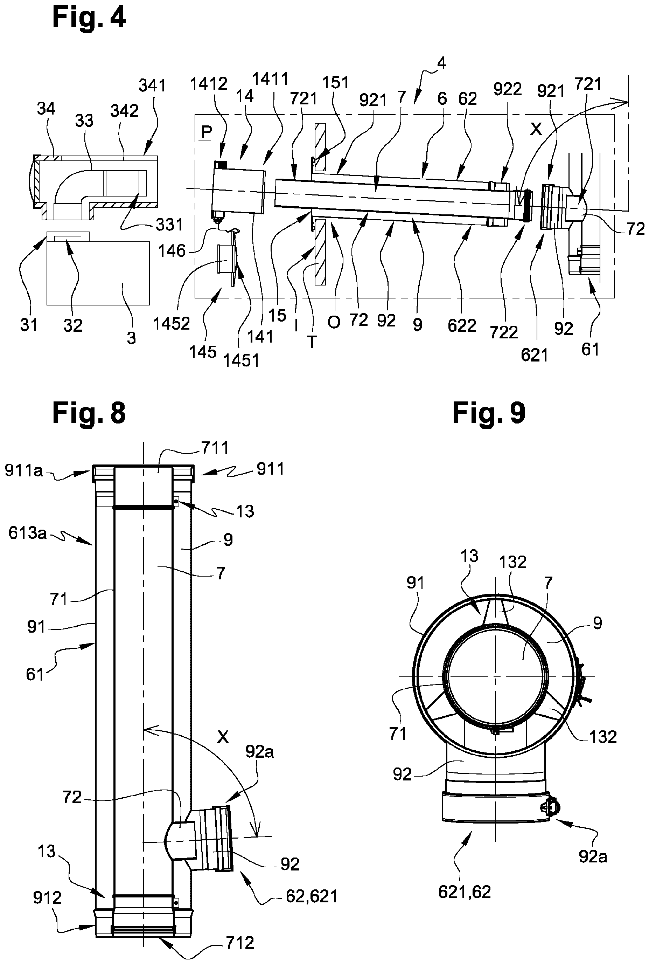

Comme on peut le voir sur la figure 4, chaque appareil thermodynamique à air 3 comprend une ouverture d'amenée d'air 31 (pour lui fournir de l'air extérieur dans lequel seront puisées des calories), et une ouverture de refoulement d'air 32 (pour l'évacuation vers l'extérieur de l'air refroidi).

L'ouverture d'amenée d'air 31 est concentrique à l'ouverture de refoulement d'air 32 et est située autour de cette dernière.

Chaque appareil thermodynamique à air 3 comprend également un tronçon de conduit intérieur 33 prolongeant son ouverture de refoulement d'air 32, et un tronçon de conduit extérieur 34 prolongeant son ouverture d'amenée d'air 31, ces deux tronçons de conduit 33, 34 étant concentriques.

Les ouvertures d'amenée d'air 32 et ouvertures de refoulement d'air 31 des différents appareil thermodynamique à air 3 sont raccordées à l'air extérieur par le biais de l'équipement 4 pour raccorder à l'air extérieur lesdits appareils thermodynamiques à air 3, lequel équipement 4 comprend un système de canalisations concentriques 6 comprenant (i) une tubulure intérieure 7 en communication avec l'air extérieur par un orifice de sortie d'air 8 et avec lesdites ouvertures de refoulement d'air 32 desdits appareils thermodynamiques à air 3, et (ii) une tubulure extérieure 9 en communication avec l'air extérieur par un orifice d'entrée d'air 10 et avec lesdites ouvertures d'amenée d'air 31 desdits appareils thermodynamiques à air 3.

Le système de canalisations concentriques 6 de l'équipement 4 de raccordement comprend :
(a) une partie verticale de système de canalisations concentriques 61 qui est placée au moins en partie à l'intérieur de la gaine technique verticale 5 ; l'extrémité supérieure 611 de cette partie verticale de système de canalisations concentriques 61 comprend un chapeau terminal 11 qui est situé à l'extérieur de la gaine technique 5 et qui est muni de l'orifice de sortie d'air 8 et de l'orifice d'entrée d'air 10 ; et son extrémité inférieure 612 (encore dénommée pied de conduit) comprend un dispositif de récupération de liquide 12, et
(b) des parties transversales de système de canalisations concentriques 62 reliant chacun desdits appareils thermodynamiques à air 3 à ladite partie verticale de système de canalisations concentriques 61 ; ces parties transversales de système de canalisations concentriques 62 présentent une pente descendante depuis l'appareil thermodynamique à air 3 en direction de ladite partie verticale de système de canalisations concentriques 61.

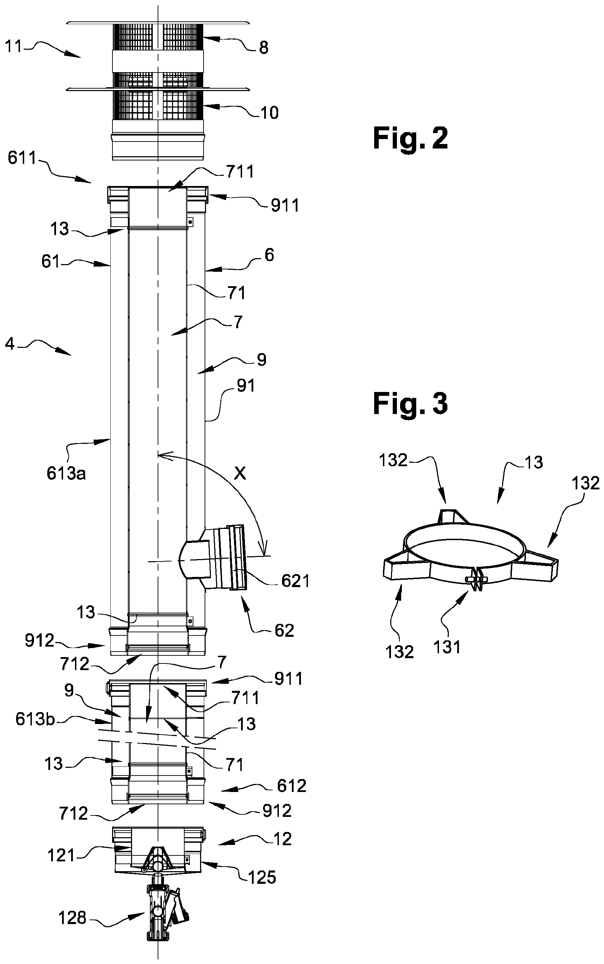

Comme on peut le voir sur la figure 2, la partie verticale de système de canalisations concentriques 61 est constituée d'une juxtaposition de tronçons de partie verticale de système de canalisations concentriques 613a, 613b qui comprennent chacun des parties d'extrémité de type mâle/femelle pour assurer leur raccordement par emboitement ; et comme on peut le voir sur la figure 4, les parties transversales de système de canalisations concentriques 62 comprennent chacune (i) un piquage de raccordement 621 solidaire d'un tronçon de partie verticale de système de canalisations concentriques 613a, et (ii) un tronçon de raccordement 622 adapté pour raccorder par emboitement ledit piquage de raccordement 621 à l'appareil thermodynamique à air 3.

Ce piquage de raccordement 621 est centré sur un axe en pente ascendante depuis le tronçon de partie verticale de système de canalisations concentriques 61. La pente correspondante est de quelques degrés. Par exemple, l'axe du piquage de raccordement 621 et du tronçon de raccordement 622 est incliné d'un angle X de 86 à 88° par rapport à l'axe de la partie verticale de système de canalisations concentriques 61.

Pour permettre une gestion optimale des flux d'air entrant et sortant, ainsi que de l'eau condensée à l'intérieur du système de canalisations concentriques 6 :
- le tronçon de tubulure intérieure 71 des tronçons de partie verticale de système de canalisations concentriques 613a, 613b, et le tronçon de tubulure intérieure 72 des tronçons de raccordement 622 des parties transversales de système de canalisations concentriques 62, comportent une extrémité située au point le plus haut, respectivement 711 et 721, dite extrémité supérieure 711 ou 721, qui est de type mâle, et une extrémité située au point le plus bas, respectivement 712, 722, dite extrémité inférieure 712 ou 722, qui est de type femelle, et
- le tronçon de tubulure extérieure 91des tronçons de partie verticale de système de canalisations concentriques 613a, 613b, et le tronçon de tubulure extérieure 92 des tronçons de raccordement 622 des parties transversales de système de canalisations concentriques 62 comportent une extrémité située au point le plus haut, respectivement 911, 921, dite extrémité supérieure 911, 921, qui est de type femelle, et une extrémité située au point le plus bas 912, 922, dite extrémité inférieure 912, 922, qui est de type mâle.

Les notions d'extrémités « supérieures » et « inférieures » se réfèrent au positionnement spatial des tubulures : vertical pour les tronçons de partie verticale de système de canalisations concentriques 613a, 613b, et incliné pour les parties transversales de système de canalisations concentriques 62.

Le sens de tels emboitements évite le passage d'eau condensée depuis l'espace annulaire vers le conduit central ou vers l'extérieur.

Dans un but d'optimisation des échanges thermiques, le tronçon de tubulure intérieure 71 des tronçons de partie verticale de système de canalisations concentriques 613a, 613b, et le tronçon de tubulure intérieure 72 des tronçons 621, 622 des parties transversales de système de canalisations concentriques 62 sont réalisées en une matière ayant une conductivité thermique peu élevée, par exemple une matière plastique type polypropylène.

D'autre part, le tronçon de tubulure extérieure 91 des tronçons de partie verticale de système de canalisations concentriques 613a, 613b et le tronçon de tubulure extérieure 92 des tronçons 621, 622 desdites parties transversales de système de canalisations concentriques 62 sont réalisées en métal, par exemple en acier inoxydable.

De plus, des éléments centreurs 13 sont interposés entre les tronçons de tubulures intérieures et extérieures 71, 91, d'une part, et 72, 92, d'autre part, pour constituer des entretoises assurant la tenue des deux tubes écartés l'un de l'autre.

Une forme de réalisation possible d'un tel élément centreur 13 est illustrée à titre d'exemple sur la figure 3. Cet élément centreur 13 comprend ici un collier de serrage 131 pour son serrage (par exemple par un système vis/écrou) autour de la tubulure intérieure associée 71, 72, et ce collier de serrage 131 est muni d'une pluralité d'organes entretoise en métal aptes à être fixés par soudage sur la face interne de la tubulure extérieure 91, 92.

On prévoit de préférence entre deux et quatre organes entretoise 132 sur chaque collier de serrage 131, uniformément répartis sur sa périphérie, ou non.

Dans l'exemple de réalisation illustré sur la figure 3, le collier de serrage 131 est associé à trois organes entretoise 132 uniformément répartis sur sa périphérie.

Les organes entretoise 132 peuvent être réalisés à partir d'un feuillard ou d'un fil métallique.

De préférence, un espace dédié est prévu sur les tubulures intérieures 71, 72 pour la réception des éléments centreurs 13 et leur maintien correct en position. Cet espace dédié peut par exemple être délimité par deux moulures formant des butées de blocage pour l'élément centreur 13. Une telle particularité permet d'assurer la bonne concentricité des 2 conduits, ainsi que leur parfait maintien l'un par rapport à l'autre.

Comme précisé ci-dessus, la partie verticale de système de canalisations concentriques 61 est constituée d'une juxtaposition de tronçons de partie verticale de système de canalisations concentriques 613a, 613b qui comprennent des parties d'extrémité de type mâle/femelle pour assurer leur raccordement par emboitement.

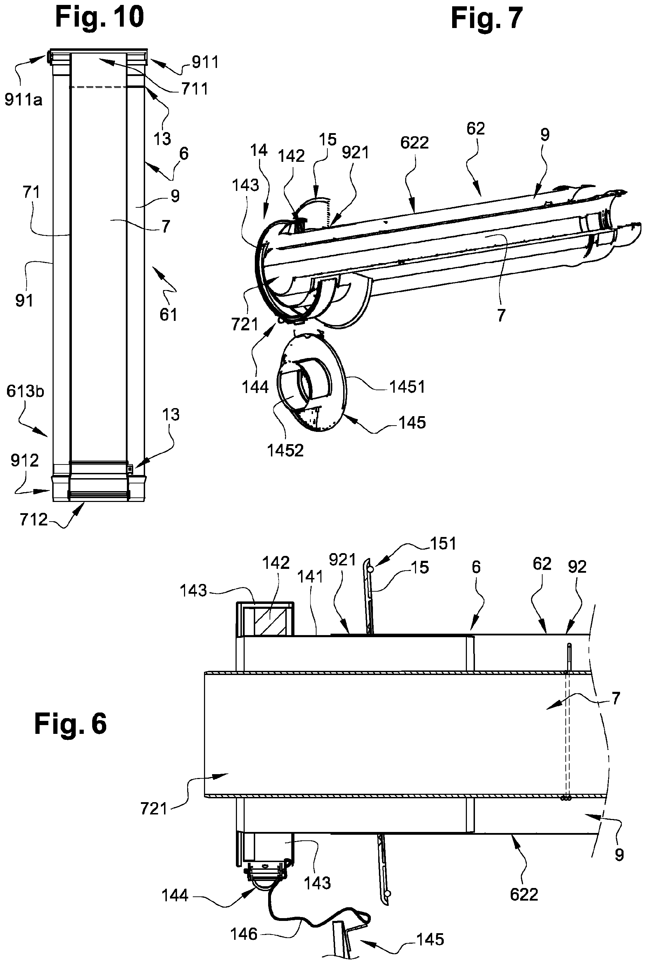

Dans l'exemple de réalisation illustré sur les figures 1 et 2, les tronçons pour réaliser la partie verticale de système de canalisations concentriques 61 sont de deux types :
(a) un premier type de tronçon 613a, représenté isolément sur les figures 8 et 9, muni d'un piquage de raccordement 621 constitutif d'une partie de partie transversale de système de canalisations concentriques 62, et
(b) un second type de tronçon 613b, dépourvu d'un tel piquage de raccordement 621 (illustré isolément sur la figure 10).

Ces deux types de tronçons de partie verticale de système de canalisations concentriques 613a, 613b sont combinés par emboitement en fonction de la structure d'habitation 1 à équiper. Et la ligne verticale de canalisations concentriques obtenue est associée par emboitement à un chapeau terminal 11 en partie haute (situé à l'extérieur de la gaine technique 5) et à un dispositif de récupération de liquide 12 en partie basse (en particulier pour récupérer l'eau formée par condensation à l'intérieur des canalisations concentriques).

Le tronçon de conduit 613a comprend donc (figures 2, 8 et 9) - un tronçon de tubulure intérieure 71 en matière plastique par exemple de type polypropylène, dont l'extrémité supérieure 711 est de type mâle et dont l'extrémité inférieure 712 est de type femelle, et - un tronçon de tubulure extérieure 91 en matière non corrosive, par exemple une matière métallique de type acier inoxydable, dont l'extrémité supérieure 911 est de type femelle et dont l'extrémité inférieure 912 est de type mâle. Ces deux tronçons de tubulure 71 et 91 sont concentriques et assemblés entre eux tout en les maintenant écartés l'un de l'autre, au moyen d'éléments centreurs 13 ici au nombre de deux, disposés à proximité des deux extrémités du tronçon de conduit correspondant, pour faciliter leur mise en place.

Les extrémités des deux tubes concentriques 71 et 91 s'étendent dans le même plan ou sensiblement dans le même plan ; et l'extrémité supérieure 911 de type femelle du tronçon de tubulure 91 est munie d'un collier de serrage 911a.

Du côté de sa partie inférieure le tronçon de conduit 613a comprend le piquage de raccordement 621 constitué - d'un tronçon de tubulure intérieure 72 en matière limitant les échanges thermiques, par exemple une matière plastique de type propylène, qui prolonge le tronçon de tubulure intérieure 71, et - d'un tronçon de tubulure extérieure 92 en matière non corrosive, par exemple une matière métallique de type acier inoxydable, qui prolonge le tronçon de tubulure extérieure 91.

L'extrémité libre du tronçon de tubulure intérieure 72 est de type mâle et l'extrémité libre du tronçon de tubulure extérieure 92 est de type femelle. Ces deux tronçons de tubulures 72 et 92 sont concentriques. L'extrémité libre du tronçon de tubulure intérieure 72 est en retrait par rapport à l'extrémité libre du tronçon de tubulure extérieure 92. La longueur de ce tronçon de tubulure intérieure 72 est adaptée pour ne pas gêner l'introduction du tronçon de tubulure 71 dans le tronçon de tubulure 91, lors de leur assemblage.

Comme précisé ci-dessus, l'axe des tronçons de tubulures concentriques 72 et 92 du piquage de raccordement 621 s'étend en légère pente ascendante orientée vers l'extrémité supérieure du tronçon de conduit 613a.

L'extrémité libre du tronçon de tubulure extérieure 92, de type femelle, est équipée d'un collier de serrage 92a.

A noter que le piquage de raccordement 621 est situé de préférence en partie basse du tronçon de conduit 613a pour permettre la traversée d'un plancher supérieur directement avec la partie droite présente au-dessus dudit piquage de raccordement 621.

De son côté, le tronçon de conduit 613b comprend (figure 2 et 10) - un tronçon de tubulure intérieure 71 en matière limitant les échanges thermiques, par exemple une matière plastique de type polypropylène, dont l'extrémité supérieure 711 est de type mâle et dont l'extrémité inférieure 712 est de type femelle, et - un tronçon de tubulure extérieure 91 en matière non corrosive, par exemple une matière métallique de type acier inoxydable, dont l'extrémité supérieure 911 est de type femelle et dont l'extrémité inférieure 912 est de type mâle. Ces deux tronçons de tubulure 71 et 91 sont concentriques et assemblés entre eux tout en les maintenant écartés l'un de l'autre, au moyen d'éléments centreurs 13 ici au nombre de deux, disposés à proximité des deux extrémités du tronçon de canalisation correspondant, pour faciliter leur mise en place.

Les extrémités des deux tubes concentriques 71 et 91 s'étendent dans le même plan ou sensiblement dans le même plan ; et l'extrémité supérieure 911 de type femelle du tronçon de tubulure 91 est équipée d'un collier de serrage 911a.

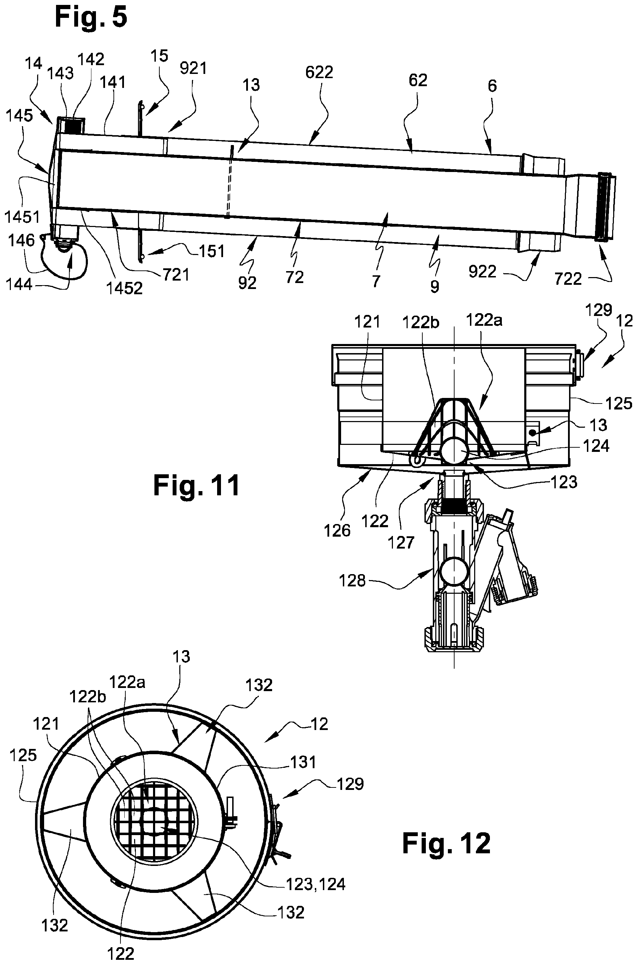

Comme on peut le voir sur la figure 4, la partie transversale du système de canalisations concentriques 62 relie la partie verticale de système de canalisations concentriques 61 à l'appareil thermodynamique à air 3 associé, cela par l'intermédiaire d'une pièce adaptateur 14, également visible sur les figures 5, 6 et 7.

La partie transversale du système de canalisations concentriques 62 comprend le piquage de raccordement 621 à l'extrémité duquel vient s'emboiter l'une des extrémités du tronçon de raccordement 622. L'autre extrémité de ce tronçon de raccordement 622 passe au travers d'une ouverture O ménagée dans une paroi de cloisonnement T délimitant la pièce P dans laquelle est disposé l'appareil thermodynamique à air 3.

Cette autre extrémité du tronçon de raccordement 622 comprend une extrémité mâle 721 du tronçon de tubulure intérieure 72 et une extrémité femelle 921 du tronçon de tubulure extérieure 92 ; et la partie d'extrémité correspondante est prévue apte à être découpée :
- de sorte que l'extrémité mâle 721 de sa tubulure intérieure 72 déborde de la face interne I de la paroi de cloisonnement T située du côté de l'appareil thermodynamique à air 3, d'une longueur adaptée pour permettre son raccordement par emboitement avec l'extrémité libre 331 en regard du tronçon de conduit intérieur 33 de l'appareil thermodynamique à air 3, et
- de sorte que l'extrémité femelle 921 de sa tubulure extérieure 92 soit située en léger débordement de ladite face interne I de la paroi de cloisonnement T.

La pièce adaptateur 14 a ici pour fonction de raccorder l'extrémité femelle 921 de la tubulure extérieure 92 du tronçon de raccordement 62 avec l'extrémité libre 341 en regard du tronçon de conduit extérieur 34 (de type mâle) prolongeant l'ouverture d'amenée d'air 31 de l'appareil thermodynamique à air 3.

Et dans le cas présent, la pièce adaptateur 14 a également pour rôle - de permettre une obturation amovible de l'extrémité femelle 921 de la tubulure extérieure 92 du tronçon de raccordement 62, en particulier pour une mise en attente avant le raccordement à l'appareil thermodynamique à air 3, et - de limiter les possibilités de raccordement à un conduit concentrique destiné aux chaudières (pour rendre possible un raccordement uniquement des appareils de type appareil thermodynamique à air).

Pour cela, la pièce adaptateur 14 comprend une virole 141 dont le diamètre extérieur correspond, au jeu près, au diamètre intérieur de la tubulure extérieure 92 du tronçon de raccordement 62 et au diamètre intérieur du tronçon de conduit extérieur 34 de l'appareil thermodynamique à air 3.

De la sorte, l'extrémité 1411 de cette virole 141 orientée du côté du tronçon de raccordement 62 forme une extrémité mâle qui vient s'emboiter à l'intérieur de l'extrémité femelle 921 de la tubulure extérieure 92 du tronçon de raccordement 62 ; et l'autre extrémité 1412 de la virole 141 orientée du côté de l'appareil thermodynamique à air 3 forme une extrémité mâle qui vient s'emboiter à l'intérieur de l'extrémité en regard 341 (de type femelle) du tronçon de conduit extérieur 34 de l'appareil thermodynamique à air 3.

En outre, comme précisé ci-dessus, l'extrémité mâle 721 du tronçon de tubulure intérieure 72 de la partie transversale du système de canalisations concentriques 62 vient s'emboiter directement dans l'extrémité femelle 331 en regard du tronçon de conduit intérieur 33 de l'appareil thermodynamique à air 3.

D'autre part, comme on peut le voir sur les figures 4 à 7, la pièce adaptateur 14 comprend au moins un organe saillant 142 s'étendant en saillie sur la surface externe de ladite virole 141, et le tronçon de conduit extérieur 34 de l'appareil thermodynamique à air 3 comprend une fente longitudinale 342 qui s'étend selon une génératrice parallèle à son axe, à partir de son extrémité libre 341, laquelle fente longitudinale 342 est adaptée au passage dudit organe saillant 142 de ladite pièce adaptateur 14, lors de l'assemblage par emboitement dudit conduit extérieur 34 de l'appareil thermodynamique à air 3 et de ladite pièce adaptateur 14.

L'organe saillant 142 (ici unique) se présente sous la forme d'un plat métallique sur chant fixé par soudage sur la virole 141 de la pièce adaptateur 14. Cet organe saillant 142 est interposé entre la surface externe de la virole 141 de la pièce adaptateur 14 et une couronne externe 143 concentrique à ladite virole 141. L'espace entre la surface externe de la virole 141 de la pièce adaptateur 14 et la couronne externe 143 est adapté au passage de l'extrémité femelle 341 du tronçon de conduit extérieur 34 de l'appareil thermodynamique à air 3.

En outre, un collier de serrage 144 est ménagé sur la couronne externe 143 pour permettre le serrage du tronçon de conduit extérieur 34 de l'appareil thermodynamique à air 3 contre la virole 141 de la pièce adaptateur 14.

La présence de l'organe saillant 142 évite (ou tout du moins limite) la possibilité de raccorder la pièce adaptateur 14 avec le conduit de raccordement d'une chaudière à combustible fossile, en particulier du fait du caractère rigide de tels conduits de raccordement. En revanche, le conduit extérieur 34 des appareils thermodynamiques à air 3 étant réalisé en matériau souple et facilement découpable, par exemple de type mousse polyéthylène ou mousse polyuréthane, la fente longitudinale 342 peut être réalisée sur place par le poseur, par exemple au moyen d'un cutter ou d'un couteau à dents, cela sans difficulté particulière.

Toujours sur les figures 4, 5, 6 et 7 on remarque que la pièce adaptateur 14 comprend encore un bouchon amovible 145 apte à obturer son ouverture située du côté de l'appareil thermodynamique à air 3, et donc adaptée pour obturer l'ouverture de la partie transversale du système de canalisations concentriques 62 située du côté de l'appareil thermodynamique à air 3.

Ce bouchon amovible 145 comprend un capot d'obturation 1451 adapté pour obturer l'ouverture de la virole 141 située du côté de l'appareil thermodynamique à air 3, lequel capot d'obturation est prolongé par une virole cylindrique 1452 adaptée pour coopérer par emboitement avec l'extrémité 721 en regard du tronçon de tubulure intérieure 72 de la partie transversale du système de canalisations concentriques 62. Pour cela, le diamètre interne de la virole cylindrique 1452 correspond, au jeu près, au diamètre externe de l'extrémité mâle 721 du tronçon de tubulure intérieure 72.

Le bouchon amovible 145 est fixé sur la couronne externe 143 de la pièce adaptateur 14 par l'intermédiaire d'un lien souple 146.

Ce lien souple 146 est de préférence réalisé en métal et nécessite un outil pour pouvoir être retiré/coupé. De la sorte le bouchon amovible 145 fait partie intégrante de l'installation et, ne pouvant pas être séparé facilement, il présente un caractère « imperdable ».

La figure 5 illustre la pièce adaptateur 14 avec son bouchon amovible 145 en position d'obturation (pour une phase d'attente de raccordement) ; et les figures 4, 6 et 7 illustrent cette même pièce adaptateur 14 avec le bouchon amovible 145 en position inactive de non obturation (en vue du raccordement avec un appareil thermodynamique à air 3, ou après un tel raccordement).

Une couronne de finition 15 en forme de rosace est montée sur la tubulure extérieure 92 du tronçon de raccordement 62, sur la périphérie de cette dernière, adaptée pour obturer le pourtour de l'ouverture O réalisée dans la paroi de cloisonnement T, du côté de sa face interne I. Cette couronne de finition 15 est montée mobile par coulissement sur la tubulure extérieure 92 pour permettre d'ajuster son positionnement contre cette face interne I de paroi T. La face de cette couronne de finition 15 qui est orientée vers la paroi T comporte un joint d'étanchéité 151, par exemple de type joint mousse autocollant en sous-face.

Comme on peut le voir notamment sur les figures 11 et 12, le dispositif de récupération de liquide 12 qui équipe l'extrémité inférieure 612 de la partie verticale du système de canalisations concentriques 61 comprend :
- une virole intérieure 121 cylindrique dont l'extrémité supérieure, de type mâle, est adaptée pour venir s'emboiter dans l'extrémité inférieure 712 de la tubulure intérieure 71 en regard de la partie verticale du système de canalisations concentriques 61 ; cette virole intérieure 121 est munie d'une paroi d'obturation 122 comprenant un orifice de passage de liquide 123 associé à une bille d'obturation 124 amovible, et
- une virole extérieure 125 cylindrique dont l'extrémité supérieure, de type femelle, est adaptée pour venir s'emboiter à l'extrémité inférieure 912 de la tubulure extérieure 91 en regard de la partie verticale du système de canalisations concentriques 61 ; cette virole extérieure 125 est munie d'une paroi d'obturation 126 comprenant un orifice de passage de liquide 127 ; cet orifice de passage de liquide 127 se prolonge par un dispositif de collecte 128, par exemple en forme de siphon.

La virole intérieure 121 et la virole extérieure 125 sont concentriques et assemblées entre elles tout en les maintenant écartés l'une de l'autre, au moyen d'un élément centreur 13 tel que décrit ci-dessus.

L'extrémité supérieure de la virole extérieure 125 cylindrique est équipée d'un collier de serrage 129.

La paroi d'obturation 122 de la virole intérieure 121 et la paroi d'obturation 126 de la virole extérieure 125 ont une forme conique dont le sommet, orienté vers le bas, comporte l'orifice de passage de liquide 123, 127 associé.

Toujours sur les figures 11 et 12, on remarque que la paroi d'obturation 122 de la virole intérieure 121 comporte une structure de cloisonnement 122a pour la bille d'obturation 124 associée, laquelle structure de cloisonnement 122a est munie d'ouvertures ou de perforations 122b. Cette structure de cloisonnement 122a consiste avantageusement en une structure métallique grillagée de forme générale conique ou tronconique ; elle est fixée sur la face de dessus de la paroi d'obturation 122, après positionnement de la bille d'obturation 124.

Ce dispositif de récupération de liquide 12 est de préférence réalisé entièrement en métal avec une protection naturelle ou rapportée contre l'humidité (par exemple en acier inoxydable).

Une telle structure comprenant une bille mobile d'obturation 124 associée à un orifice de passage de liquide 123 ménagé dans la paroi d'obturation 122 de la virole intérieure 121 permet d'assurer l'étanchéité entre les deux zones d'écoulement d'air et de n'avoir qu'une seule sortie sur siphon.

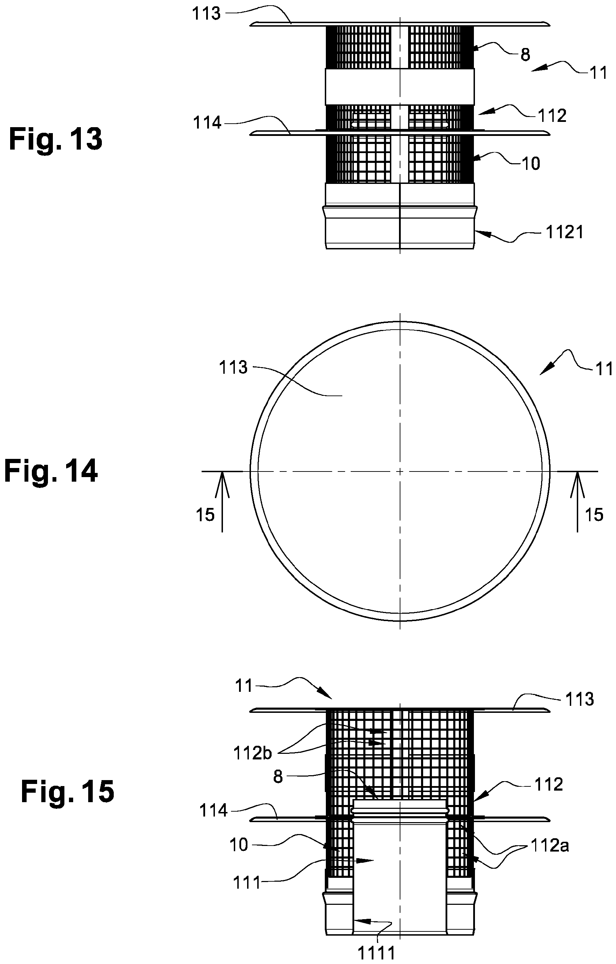

D'autre part, comme on peut le voir notamment sur les figures 13, 14 et 15, le chapeau terminal 11 comprend :
- un tube prolongateur 111 plein muni en partie basse d'une partie d'emboitement 1111 de type femelle pour son emboitement sur l'extrémité supérieure 711 de la tubulure intérieure 71 en regard de la partie verticale du système de canalisations concentriques 61, et
- un organe tubulaire prolongateur 112 disposé de manière concentrique autour dudit tube prolongateur 111, lequel organe tubulaire prolongateur 112 est muni en partie basse d'une partie d'emboitement 1121 de type mâle pour son emboitement sur l'extrémité supérieure 911 de la tubulure extérieure 91 de la partie verticale du système de canalisations concentriques 61.

De la sorte, l'ouverture circulaire de l'extrémité supérieure du tube prolongateur 111 constitue l'orifice de sortie d'air 8, et l'ouverture cylindrique entre le tube prolongateur 111 et l'organe tubulaire prolongateur 112 constitue l'orifice d'entrée d'air 10.

L'organe tubulaire prolongateur 112 s'étend jusqu'à un niveau supérieur par rapport à l'extrémité libre du tube prolongateur 111, et l'extrémité supérieure de l'organe tubulaire prolongateur 112 est équipée d'un plateau supérieur 113 horizontal de recouvrement; un plateau intermédiaire 114 horizontal est situé sous l'extrémité supérieure du tube prolongateur 111. Ce plateau intermédiaire 114 vient cloisonner l'espace entre le tube prolongateur 111 et l'organe tubulaire prolongateur 112.

L'organe tubulaire prolongateur 112 comporte une pluralité d'ouvertures 112a ménagées sous le plateau intermédiaire 114 pour assurer l'amenée d'air vers les appareils thermodynamiques à air 3 (par l'intermédiaire de l'orifice d'entrée d'air 10) ; il comporte également une pluralité d'ouvertures 112b ménagées au dessus dudit plateau intermédiaire 114 pour assurer l'évacuation vers l'extérieur de l'air provenant des appareils thermodynamiques à air 3 (par l'intermédiaire de l'orifice de refoulement d'air 8).

Comme on peut le voir sur les figures 13 à 15, le plateau supérieur 113 et le plateau intermédiaire 114 sont en forme de disque dont le diamètre est supérieur au diamètre de l'organe tubulaire prolongateur112.

Le plateau intermédiaire 114 réalise l'assemblage entre le tube prolongateur 111 et l'organe tubulaire prolongateur 112.

Ce chapeau terminal 11 est de préférence réalisé entièrement en métal avec une protection naturelle ou rapportée contre l'humidité (par exemple en acier inoxydable).

Un tel chapeau terminal 11 est conçu de telle sorte qu'il permet à la fois de limiter les pertes de charge sur chacune des zones d'admission et d'évacuation d'air, et de limiter les entrées d'eau de pluie.

La présente invention peut s'appliquer à l'équipement d'une structure d'habitation comprenant un unique appareil thermodynamique à air de type chauffe-eau thermodynamique (CET) ou pompe à chaleur (PAC) par exemple.

Ainsi, la solution technique décrite peut être intégrée :
- dans une installation de production d'eau chaude sanitaire individuelle ou collective (CET),
- dans une installation de production de chauffage ou de rafraichissement à air individuelle ou collective (PAC),
- dans une installation combinée de production de chauffage/rafraichissement et d'eau chaude sanitaire individuelle ou collective (CET+PAC).

Dans le cadre de l'équipement d'une structure d'habitation comprenant un unique appareil thermodynamique à air, la partie transversale de système de canalisations concentriques 62 peut ne pas être présente et la partie verticale de système de canalisations concentriques 61 vient alors se raccorder directement sur l'ouverture de refoulement d'air 32 et l'ouverture d'amenée d'air 31 de l'appareil thermodynamique à air 3. Dans un tel cas, la partie verticale de système de canalisations concentriques 61 peut venir se raccorder à l'appareil thermodynamique à air 3 directement par une pente descendante, cet appareil thermodynamique à air 3 comprenant son propre dispositif de récupération de liquide.

A noter que la structure originale de chapeau terminal 11, tout comme la structure originale du dispositif de récupération de liquide 12, ou encore la structure originale de la pièce adaptateur 14, décrits ci-dessus, pourraient être mises en oeuvre, en combinaison ou non, au sein d'équipements à conduits concentriques modulaires ne comprenant pas les sens d'emboitement spécifiques présentés dans la présente description.

## Revendications

1. Equipement (4) pour raccorder à l'air extérieur un appareil thermodynamique à air (3), type chauffe-eau thermodynamique (CET) ou pompe à chaleur (PAC) par exemple, destiné à équiper une structure d'habitation (1), l'équipement comprenant un système de canalisations concentriques (6),
ledit appareil thermodynamique à air (3) comprenant une ouverture de refoulement d'air (32) et une ouverture d'amenée d'air (31), laquelle ouverture d'amenée d'air (31) est concentrique à ladite ouverture de refoulement d'air (32) et située autour de cette dernière,
lesquelles ouverture d'amenée d'air (31) et ouverture de refoulement d'air (32) dudit appareil thermodynamique à air (3) sont raccordables à l'air extérieur par le biais dudit système de canalisations concentriques (6,) ce système de canalisations concentriques (6) comprenant une tubulure intérieure (7) en communication avec l'air extérieur par un orifice de sortie d'air (8) et configurée pour communiquer avec ladite ouverture de refoulement d'air (32) dudit appareil thermodynamique à air (3), et une tubulure extérieure (9) en communication avec l'air extérieur par un orifice d'entrée d'air (10) et configurée pour communiquer avec ladite ouverture d'amenée d'air (31) dudit appareil thermodynamique à air (3),
lequel système de canalisations concentriques (6) comprend :
- une partie verticale de système de canalisations concentriques (61), dont l'extrémité supérieure (611) comprend un chapeau terminal (11) situé à l'extérieur de la structure d'habitation (1), lequel chapeau terminal (11) comprend lesdits orifice de sortie d'air (8) et orifice d'entrée d'air (10), et
- une éventuelle partie transversale de système de canalisations concentriques (62) qui relie ledit appareil thermodynamique à air (3) à ladite partie verticale de système de canalisations concentriques (61), laquelle partie transversale de système de canalisations concentriques (62) présente une pente descendante depuis l'appareil thermodynamique à air (3) en direction de ladite partie verticale de système de canalisations concentriques (61),
ladite partie verticale de système de canalisations concentriques (61) est constituée d'une juxtaposition de tronçons de partie verticale de système de canalisations concentriques (613a, 613b),
ledit équipement (4) étant **caractérisé en ce que** les tronçons de partie verticale de système de canalisations concentriques (613a, 613b) comprennent des parties d'extrémité de type mâle/femelle (711, 712, 911, 912) pour assurer leur raccordement par emboîtement,
**en ce que** l'
l'extrémité inférieure (612) dudit système de canalisations concentriques (6) comprend un dispositif de récupération de liquide (12), **en ce que** ladite éventuelle partie transversale de système de canalisations concentriques (62) comprend au moins un tronçon de raccordement (621, 622) adapté pour se raccorder par emboitement à ladite partie verticale de système de canalisations concentriques (61),
et **en ce que** :
- le tronçon de tubulure intérieure (71) desdits tronçons de partie verticale de système de canalisations concentriques (613a, 613b) et le tronçon de tubulure intérieure (72) dudit au moins un tronçon de raccordement (621, 622) de ladite éventuelle partie transversale de système de canalisations concentriques (62) comportent une extrémité située au point le plus haut, dite extrémité supérieure (711, 721), qui est de type mâle, et une extrémité située au point le plus bas, dite extrémité inférieure (712, 722), qui est de type femelle, et
- le tronçon de tubulure extérieure (91) desdits tronçons de partie verticale de système de canalisations concentriques (613a, 613b) et le tronçon de tubulure extérieure (92) dudit au moins un tronçon de raccordement (621, 622) de ladite éventuelle partie transversale de système de canalisations concentriques (62) comportent une extrémité située au point le plus haut, dite extrémité supérieure (911, 921), qui est de type femelle, et une extrémité située au point le plus bas, dite extrémité inférieure (912, 922), qui est de type mâle.

2. Equipement (4) selon la revendication 1 pour raccorder à l'air extérieur une pluralité d'appareils thermodynamiques à air (3), type chauffe-eau thermodynamique (CET) ou pompe à chaleur (PAC) par exemple, lesquels appareils thermodynamiques à air (3) sont disposés sur plusieurs niveaux, chacun dans une pièce (P) d'une structure d'habitation (1) en forme d'un immeuble collectif qui comprend une gaine technique (5) verticale,
l'équipement comprenant un système de canalisations concentriques (6),
chacun desdits appareils thermodynamiques à air (3) comprenant une ouverture de refoulement d'air (32) et une ouverture d'amenée d'air (31), laquelle ouverture d'amenée d'air (31) est concentrique à ladite ouverture de refoulement d'air (32) et située autour de cette dernière,
lesquelles ouverture d'amenée d'air (31) et ouverture de refoulement d'air (32) des appareils thermodynamiques à air (3) sont raccordables à l'air extérieur par le biais dudit système de canalisations concentriques (6), ce système de canalisations concentriques (6) comprenant une tubulure intérieure (7) en communication avec l'air extérieur par un orifice de sortie d'air (8) et configurée pour communiquer avec lesdites ouvertures de refoulement d'air (32) des appareils thermodynamiques à air (3), et une tubulure extérieure (9) en communication avec l'air extérieur par un orifice d'entrée d'air (10) et configurée pour communiquer avec lesdites ouvertures d'amenée d'air (31) des appareils thermodynamiques à air (3),
lequel système de canalisations concentriques (6) comprend :
- une partie verticale de système de canalisations concentriques (61) adaptée pour être placée au moins en partie à l'intérieur de ladite gaine technique (5) verticale, l'extrémité supérieure (611) de ladite partie verticale de système de canalisations concentriques (61) comprenant un chapeau terminal (11) adapté pour être situé à l'extérieur de ladite gaine technique (5), lequel chapeau terminal (11) comprend lesdits orifice de sortie d'air (8) et orifice d'entrée d'air (10), et
- des parties transversales de système de canalisations concentriques (62) reliant chacun desdits appareils thermodynamiques à air (3) à ladite partie verticale de système de canalisations concentriques (61), lesquelles parties transversales de système de canalisations concentriques (62) présentent une pente descendante depuis l'appareil thermodynamique à air (3) en direction de ladite partie verticale de système de canalisations concentriques (61),
ladite partie verticale de système de canalisations concentriques (61) est constituée d'une juxtaposition de tronçons de partie verticale de système de canalisations concentriques (613a, 613b) comprenant des parties d'extrémité de type mâle/femelle (711, 712 ; 911, 912) pour assurer leur raccordement par emboitement, son extrémité inférieure (612) comprenant un dispositif de récupération de liquide (12),
lesdites parties transversales de système de canalisations concentriques (62) comprennent chacune (i) un piquage de raccordement (621) solidaire d'un tronçon de partie verticale de système de canalisations concentriques (613a), lequel piquage de raccordement (621) est centré sur un axe en pente ascendante depuis ledit tronçon de partie verticale de système de canalisations concentriques (613a), et (ii) au moins un tronçon de raccordement (622) adapté pour raccorder par emboitement ledit piquage de raccordement (621) audit appareil thermodynamique à air (3), et :
- le tronçon de tubulure intérieure (71) desdits tronçons de partie verticale de système de canalisations concentriques (613a, 613b) et le tronçon de tubulure extérieure (72) desdits tronçons de raccordement (621, 622) desdites parties transversales de système de canalisations concentriques (62) comportent une extrémité située au point le plus haut, dite extrémité supérieure (711, 721), qui est de type mâle, et une extrémité située au point le plus bas, dite extrémité inférieure (712, 722), qui est de type femelle, et
- le tronçon de tubulure extérieure (91) desdits tronçons de partie verticale de système de canalisations concentriques (613a, 613b) et le tronçon de tubulure extérieure (92) desdits tronçons de raccordement (621, 622) desdites parties transversales de système de canalisations concentriques (62) comportent une extrémité située au point le plus haut, dite extrémité supérieure (911, 921), qui est de type femelle, et une extrémité située au point le plus bas, dite extrémité inférieure (912, 922), qui est de type mâle.

3. Equipement (4) selon l'une quelconque des revendications 1 ou 2, dans lequel le tronçon de tubulure intérieure (71) desdits tronçons de partie verticale de système de canalisations concentriques (613a, 613b) et éventuellement le tronçon de tubulure intérieure (72) des tronçons (621, 622) desdites parties transversales de système de canalisations concentriques (62) sont réalisées en une matière ayant une conductivité thermique peu élevée, par exemple une matière plastique type polypropylène,
le tronçon de tubulure extérieure (91) desdits tronçons de partie verticale de système de canalisations concentriques (613a, 613b) et éventuellement le tronçon de tubulure extérieure (92) des tronçons (621, 622) desdites parties transversales de système de canalisations concentriques (62) sont réalisées en métal, par exemple en acier inoxydable,
et des éléments centreurs (13) assurent l'écartement entre lesdits tronçons de tubulures intérieures et extérieures (71, 72), lesquels éléments centreurs (13) comprennent un collier de serrage (131) pour leur serrage autour dudit tronçon de tubulure intérieure (71), lequel collier de serrage (131) est muni d'au moins deux organes entretoise (132) en métal aptes à être fixés par soudage sur ledit tronçon de tubulure extérieure (91).

4. Equipement (4) selon l'une quelconque des revendications 1 à 3, raccordable à au moins un appareil thermodynamique à air (3) comprenant un tronçon de conduit intérieur (33) prolongeant son ouverture de refoulement d'air (32), et un tronçon de conduit extérieur (34) prolongeant son ouverture d'amenée d'air (31) muni d'une extrémité libre (341), ledit tronçon de tubulure extérieure (92) dudit au moins un tronçon de raccordement (621, 622) de la partie transversale de système de canalisations concentriques (62) est raccordable à ladite extrémité libre (341) du tronçon de conduit extérieur (34) dudit au moins un appareil thermodynamique à air (3) par l'intermédiaire d'une pièce adaptateur (14).

5. Equipement (4) selon la revendication 4, dans lequel ladite pièce adaptateur (14) comprend une virole (141) dont le diamètre extérieur correspond, au jeu près, au diamètre intérieur de la tubulure extérieure (92) dudit tronçon de raccordement (62) et au diamètre intérieur du tronçon de conduit extérieur (34) de l'appareil thermodynamique à air (3).

6. Equipement (4) selon la revendication 5, dans lequel ladite pièce adaptateur (14) comprend au moins un organe saillant (142) s'étendant en saillie sur la surface externe de ladite virole (141), et en ce que ledit tronçon de conduit extérieur (34) de l'appareil thermodynamique à air (3) comprend une fente longitudinale (342) qui s'étend selon une génératrice parallèle à son axe, à partir de son extrémité libre (341), lequel organe saillant (142) de ladite pièce adaptateur (14) est adapté à passer dans ladite fente longitudinale (342), lors de l'assemblage par emboitement dudit conduit extérieur (34) de l'appareil thermodynamique à air (3) et de ladite pièce adaptateur (14).

7. Equipement (4) selon la revendication 6, comprenant une couronne externe (143), ledit au moins un organe saillant (142) étant interposé entre la surface externe de la virole (141) de la pièce adaptateur (14) et ladite couronne externe (143) concentrique, l'espace entre ladite surface externe de la virole (141) de la pièce adaptateur (14) et ladite couronne externe (143) concentrique étant adapté au passage dudit tronçon de conduit extérieur (34) de l'appareil thermodynamique à air (3),
et un collier de serrage (144) étant ménagé sur ladite couronne externe (143) concentrique pour permettre le serrage dudit tronçon de conduit extérieur (34) de l'appareil thermodynamique à air (3) contre ladite virole (141) de la pièce adaptateur (14).

8. Equipement (4) selon l'une quelconque des revendications 4 à 7, dans lequel ladite pièce adaptateur (14) comprend un bouchon amovible (145) apte à obturer l'ouverture de la partie transversale du système de canalisations concentriques (62) qui est située du côté de l'appareil thermodynamique à air (3).

9. Equipement (4) selon la revendication 8 prise sous la dépendance de la revendication 7, dans lequel ledit bouchon amovible (145) est fixé sur ladite couronne externe (143) concentrique de la pièce adaptateur (14) par l'intermédiaire d'un lien souple (146).

10. Equipement (4) selon l'une quelconque des revendications 1 à 9, dans lequel le ou l'un des tronçons de raccordement (62) du système de canalisations concentriques est adapté pour passer au travers d'une ouverture (O) d'une paroi de cloisonnement (T) délimitant la pièce (P) dans laquelle est disposé l'appareil thermodynamique à air (3), lequel tronçon de raccordement (62) comprend une partie d'extrémité apte à être découpée, de sorte que sa tubulure interne (72) déborde de la face interne (I) de ladite paroi de cloisonnement (T) située du côté de l'appareil thermodynamique à air (3), d'une longueur adaptée au positionnement d'un tronçon de conduit intérieur (33) prolongeant l'ouverture de refoulement d'air (32) de l'appareil thermodynamique à air (3), et de sorte que sa tubulure externe (92) soit située en léger débordement de ladite face interne (I) de la paroi de cloisonnement (T), une couronne de finition (15) en forme de rosace mobile par coulissement étant montée sur ladite tubulure externe (92) pour obturer le pourtour de ladite ouverture de paroi (O).

11. Equipement (4) selon l'une quelconque des revendications 1 à 10, dans lequel ledit dispositif de récupération de liquide (12) comprend :
- une virole intérieure (121) cylindrique adaptée pour venir s'emboiter à l'extrémité inférieure de la tubulure intérieure (71) de la partie verticale du système de canalisations concentriques (61), laquelle virole intérieure (121) est munie d'une paroi d'obturation (122) comprenant un orifice (123) de passage de liquide associé à une bille d'obturation amovible (124), et
- une virole extérieure (125) cylindrique adaptée pour venir s'emboiter à l'extrémité inférieure de la tubulure extérieure (91) de la partie verticale du système de canalisations concentriques (61), laquelle virole extérieure (125) est munie d'une paroi d'obturation (126) munie d'un orifice (127) de passage de liquide, lequel orifice (127) de passage de liquide se prolonge par un dispositif de collecte (128), par exemple en forme de siphon.

12. Equipement (4) selon la revendication 11, dans lequel ladite paroi d'obturation (122) de la virole intérieure (121) et ladite paroi d'obturation (126) de la virole extérieure (125) ont une forme conique dont le sommet, orienté vers le bas, comporte l'orifice (123, 127) de passage de liquide associé.

13. Equipement (4) selon l'une quelconque des revendications 11 ou 12, dans lequel ladite paroi d'obturation (122) de la virole intérieure (121) comporte une structure de cloisonnement (122a) pour la bille d'obturation (124) associée, laquelle structure de cloisonnement (122a) est munie d'ouvertures ou de perforations (122b).

14. Equipement (4) selon l'une quelconque des revendications 1 à 13, dans lequel ledit chapeau terminal (11) comprend :
- un tube prolongateur (111) plein muni d'une partie (1111) d'emboitement pour son emboitement sur l'extrémité supérieure (711) de la tubulure intérieure (71) de la partie verticale du système de canalisations concentriques (61),
- un organe tubulaire prolongateur (112) disposé de manière concentrique autour dudit tube prolongateur (111), lequel organe tubulaire prolongateur (112) est muni d'une partie d'emboitement (1121) pour son emboitement sur l'extrémité supérieure (911) de la tubulure extérieure (91) de la partie verticale du système de canalisations concentriques (61),
lequel organe tubulaire prolongateur (112) s'étend jusqu'à un niveau supérieur par rapport à l'extrémité libre dudit tube prolongateur (111), l'extrémité supérieure dudit organe tubulaire prolongateur (112) étant équipée d'un plateau supérieur (113) horizontal de recouvrement, et un plateau intermédiaire (114) horizontal étant situé sous l'extrémité supérieure dudit tube prolongateur (111), lequel plateau intermédiaire (114) vient cloisonner l'espace entre ledit tube prolongateur (111) et ledit organe tubulaire prolongateur (112),
lequel organe tubulaire prolongateur (112) comporte (i) une pluralité d'ouvertures (112a) ménagées sous ledit plateau intermédiaire (114) pour assurer l'amenée d'air vers les appareils thermodynamiques à air (3), et (ii) une pluralité d'ouvertures (112b) ménagées au-dessus dudit plateau intermédiaire (114) pour assurer l'évacuation vers l'extérieur de l'air provenant des appareils thermodynamiques à air (3).

15. Equipement (4) selon la revendication 14, dans lequel ledit plateau supérieur (113) et ledit plateau intermédiaire (114) sont en forme de disque dont le diamètre est supérieur au diamètre de l'organe tubulaire prolongateur (112).

16. Installation de production d'air chaud/froid ou d'eau chaude pour une structure d'habitation (1) comprenant :
a) au moins un appareil thermodynamique à air (3), type chauffe-eau thermodynamique (CET) ou pompe à chaleur (PAC), et
b) un équipement (4) pour raccorder à l'air extérieur ledit au moins un appareil thermodynamique à air (3), selon l'une quelconque des revendications 1 à 15.

## Patentansprüche

1. Eine zur Ausstattung einer Wohnstruktur (1) bestimmte Ausrüstung (4) zum Anschließen mindestens eines thermodynamischen Luftgeräts (3), zum Beispiel vom Typ eines thermodynamischen Wasserboilers (CET) oder einer Wärmepumpe (PAC), an die Außenluft, wobei die Ausrüstung ein System aus konzentrischen Kanalisationen (6) aufweist,
wobei das thermodynamische Luftgerät (3) eine Öffnung (32) zum Ausstoßen von Luft und eine Öffnung (31) zum Zuführen von Luft aufweist, wobei die Öffnung (31) zum Zuführen von Luft zur Öffnung (32) zum Ausstoßen von Luft konzentrisch ist und um letztere herum angeordnet ist,
wobei die Öffnung (31) zum Zuführen von Luft und die Öffnung (32) zum Ausstoßen von Luft des thermodynamischen Luftgeräts (3) über das System aus konzentrischen Kanalisationen (6) mit der Außenluft verbindbar sind, wobei das System aus konzentrischen Kanalisationen (6) ein mit der Außenluft über eine Luftaustrittsöffnung (8) in Verbindung stehendes und zum Kommunizieren mit der Öffnung (32) zum Ausstoßen von Luft des thermodynamischen Luftgeräts (3) ausgelegtes inneres Rohr (7) und ein mit der Außenluft über eine Lufteintrittsöffnung (10) in Verbindung stehendes und zum Kommunizieren mit der Öffnung (31) zum Zuführen von Luft des thermodynamischen Luftgeräts (3) ausgelegtes äußeres Rohr (9) aufweist,
wobei das System aus konzentrischen Kanalisationen (6)
- einen senkrechten Teil (61) des Systems aus konzentrischen Kanalisationen, deren oberes Ende (611) eine außerhalb der Wohnstruktur (1) angeordnete Abschlußhaube (11) aufweist, wobei die Abschlußhaube (11) die Luftaustrittsöffnung (8) und die Lufteintrittsöffnung (10) aufweist, und
- eventuell einen quer verlaufenden Teil (62) des Systems aus konzentrischen Kanalisationen, der das thermodynamische Luftgerät (3) mit dem senkrechten Teil (61) des Systems aus konzentrischen Kanalisationen verbindet, wobei der quer verlaufende Teil (62) des Systems aus konzentrischen Kanalisationen eine vom thermodynamischen Luftgerät (3) zum senkrechten Teil (61) des Systems aus konzentrischen Kanalisationen hin abfallende Schräge aufweist,
aufweist,
wobei der senkrechte Teil (61) des Systems aus konzentrischen Kanalisationen aus einer Aneinanderreihung von Abschnitten (613a, 613b) des senkrechten Teils des Systems aus konzentrischen Kanalisationen besteht,
wobei die Ausrüstung (4) **dadurch gekennzeichnet ist, daß** die Abschnitte (613a, 613b) des senkrechten Teils des Systems aus konzentrischen Kanalisationen Endstücke (711, 712, 911, 912) vom Stecker- beziehungsweise Muffentyp aufweisen, um deren Verbindung durch Ineinanderstecken sicherzustellen,
daß das untere Ende (612) des Systems aus konzentrischen Kanalisationen (6) eine Flüssigkeitsauffangvorrichtung (12) aufweist, daß der eventuelle quer verlaufende Teil (62) des Systems aus konzentrischen Kanalisationen mindestens einen Anschlußabschnitt (621, 622) aufweist, der dazu ausgelegt ist, mit dem senkrechten Teil (61) des Systems aus konzentrischen Kanalisationen durch Ineinanderstecken verbunden zu werden,
und daß
- der innere Rohrabschnitt (71) der Abschnitte (613a, 613b) des senkrechen Teils des Systems aus konzentrischen Kanalisationen und der innere Rohrabschnitt (72) des mindestens einen Anschlußabschnitts (621, 622) des eventuellen quer verlaufenden Teils (62) des Systems aus konzentrischen Kanalisationen ein am höchsten Punkt gelegenes, als oberes Ende (711, 721) bezeichnetes Ende, das vom Steckertyp ist, und ein am tiefsten Punkt gelegenes, als unteres Ende (712, 722) bezeichnetes Ende, das vom Muffentyp ist, aufweisen und
- der äußere Rohrabschnitt (91) der Abschnitte (613a, 613b) des senkrechen Teils des Systems aus konzentrischen Kanalisationen und der äußere Rohrabschnitt (92) des mindestens einen Anschlußabschnitts (621, 622) des eventuellen quer verlaufenden Teils (62) des Systems aus konzentrischen Kanalisationen ein am höchsten Punkt gelegenes, als oberes Ende (911, 921) bezeichnetes Ende, das vom Muffentyp ist, und ein am tiefsten Punkt gelegenes, als unteres Ende (912, 922) bezeichnetes Ende, das vom Steckertyp ist, aufweisen.

2. Ausrüstung (4) gemäß Anspruch 1 zum Anschließen einer Anzahl thermodynamischer Luftgeräte (3), zum Beispiel vom Typ eines thermodynamischen Wasserboilers (CET) oder einer Wärmepumpe (PAC), an die Außenluft, wobei die thermodynamischen Luftgeräte (3) auf mehreren Stockwerken angeordnet sind, jedes in einem Raum (P) einer Wohnstruktur (1) in Form eines Mehrfamilienwohngebäudes, das einen senkrechten Installationskanal (5) aufweist, wobei die Ausrüstung ein System aus konzentrischen Kanalisationen (6) aufweist, wobei jedes der thermodynamischen Luftgeräte (3) eine Öffnung (32) zum Ausstoßen von Luft und eine Öffnung (31) zum Zuführen von Luft aufweist, wobei die Öffnung (31) zum Zuführen von Luft zur Öffnung (32) zum Ausstoßen von Luft konzentrisch ist und um letztere herum angeordnet ist,
wobei die Öffnung (31) zum Zuführen von Luft und die Öffnung (32) zum Ausstoßen von Luft der thermodynamischen Luftgeräte (3) über das System aus konzentrischen Kanalisationen (6) mit der Außenluft verbindbar sind, wobei das System aus konzentrischen Kanalisationen (6) ein mit der Außenluft über eine Luftaustrittsöffnung (8) in Verbindung stehendes und zum Kommunizieren mit den Öffnungen (32) zum Ausstoßen von Luft der thermodynamischen Luftgeräte (3) ausgelegtes inneres Rohr (7) und ein mit der Außenluft über eine Lufteintrittsöffnung (10) in Verbindung stehendes und zum Kommunizieren mit den Öffnungen (31) zum Zuführen von Luft der thermodynamischen Luftgeräte (3) ausgelegtes äußeres Rohr (9) aufweist,
wobei das System aus konzentrischen Kanalisationen (6)
- einen senkrechten Teil (61) des Systems aus konzentrischen Kanalisationen, der dazu ausgelegt ist, mindestens teilweise im Inneren des senkrechten Installationskanals (5) angeordnet zu sein, wobei das obere Ende (611) des senkrechten Teils (61) des Systems aus konzentrischen Kanalisationen eine Abschlußhaube (11) aufweist, die dazu ausgelegt ist, außerhalb des Installationskanals (5) angeordnet zu sein, wobei die Abschlußhaube (11) die Luftaustrittsöffnung (8) und die Lufteintrittsöffnung (10) aufweist, und
- quer verlaufende Teile (62) des Systems aus konzentrischen Kanalisationen, die jedes der thermodynamischen Luftgeräte (3) mit dem senkrechten Teil (61) des Systems aus konzentrischen Kanalisationen verbinden, wobei die quer verlaufenden Teile (62) des Systems aus konzentrischen Kanalisationen eine abfallende Schräge vom thermodynamischen Luftgerät (3) zum senkrechten Teil (61) des Systems aus konzentrischen Kanalisationen hin aufweisen,
aufweist,
wobei der senkrechte Teil (61) des Systems aus konzentrischen Kanalisationen aus einer Aneinanderreihung von Abschnitten (613a, 613b) des senkrechten Teils des Systems aus konzentrischen Kanalisationen besteht, die Endteile (711, 712; 911, 912) vom Stecker- beziehungsweise Muffentyp aufweisen, um deren Verbinden durch Ineinanderstecken sicherzustellen, wobei dessen unteres Ende (612) eine Flüssigkeitsauffangvorrichtung (12) aufweist,
wobei die quer verlaufenden Teile (62) des Systems aus konzentrischen Kanalisationen jeweils (i) einen mit einem Abschnitt (613a) des senkrechen Teils des Systems aus konzentrischen Kanalisationen fest verbundenen Anschlußstutzen (621), wobei der Anschlußstutzen (621) zu einer Achse mit von dem Abschnitt (613a) des senkrechen Teils des Systems aus konzentrischen Kanalisationen aus aufsteigender Schräge zentrisch ist, und (ii) mindestens einen Anschlußabschnitt (622) zum Anschließen des Anschlußstutzens (621) an das thermodynamische Luftgerät (3) durch Ineinanderstecken aufweist,
und wobei
- der innere Rohrabschnitt (71) der Abschnitte (613a, 613b) des senkrechen Teils des Systems aus konzentrischen Kanalisationen und der äußere Rohrabschnitt (72) der Anschlußabschnitte (621, 622) der quer verlaufenden Teile (62) des Systems aus konzentrischen Kanalisationen ein am höchsten Punkt gelegenes, als oberes Ende (711, 721) bezeichnetes Ende, das vom Steckertyp ist, und ein am tiefsten Punkt gelegenes, als unteres Ende (712, 722) bezeichnetes Ende, das vom Muffentyp ist, aufweisen und
- der äußere Rohrabschnitt (91) der Abschnitte (613a, 613b) des senkrechen Teils des Systems aus konzentrischen Kanalisationen und der äußere Rohrabschnitt (92) der Anschlußabschnitte (621, 622) der quer verlaufenden Teile (62) des Systems aus konzentrischen Kanalisationen ein am höchsten Punkt gelegenes, als oberes Ende (911, 921) bezeichnetes Ende, das vom Muffentyp ist, und ein am tiefsten Punkt gelegenes, als unteres Ende (912, 922) bezeichnetes Ende, das vom Steckertyp ist, aufweisen.

3. Ausrüstung (4) gemäß einem der Ansprüche 1 oder 2, wobei
der innere Rohrabschnitt (71) der Abschnitte (613a, 613b) des senkrechen Teils des Systems aus konzentrischen Kanalisationen und eventuell der innere Rohrabschnitt (72) der Anschlußabschnitte (621, 622) der quer verlaufenden Teile (62) des Systems aus konzentrischen Kanalisationen aus einem Material gefertigt sind, das eine wenig große Wärmeleitfähigkeit aufweist, zum Beispiel aus einem Plastikmaterial vom Typ Polypropylen,
der äußere Rohrabschnitt (91) der Abschnitte (613a, 613b) des senkrechen Teils des Systems aus konzentrischen Kanalisationen und eventuell der äußere Rohrabschnitt (92) der Abschnitte (621, 622) der quer verlaufenden Teile (62) des Systems aus konzentrischen Kanalisationen aus Metall, zum Beispiel aus rostfreiem Stahl, gefertigt sind,
und Zentrierelemente (13) den Abstand zwischen den inneren und den äußeren Rohrabschnitten (71, 72) sicherstellen, wobei die Zentrierelemente (13) einen Klemmring (131) zu deren Festklemmen um den inneren Rohrabschnitt (71) herum aufweisen, wobei der Klemmring (131) mit mindestens zwei Abstandsorganen (132) aus Metall versehen sind, die dazu ausgelegt sind, durch Lötung auf dem äußeren Rohrabschnitt (91) befestigt zu werden.

4. Ausrüstung (4) gemäß einem der Ansprüche 1 bis 3, die an mindestens ein thermodynamisches Luftgerät (3) anschließbar ist, das einen inneren Leitungsabschnitt (33), der dessen Luftaustrittsöffnung (32) verlängert, und einen äußeren Leitungsabschnitt (34), der dessen mit einem freien Ende (341) versehene Lufteintrittsöffnung (31) verlängert, aufweist, wobei der äußere Rohrabschnitt (92) des mindestens einen Anschlußabschnitts (621, 622) des quer verlaufenden Teils (62) des Systems aus konzentrischen Kanalisationen mit dem freien Ende (341) des äußeren Leitungsabschnitts (34) des mindestens einen thermodynamischen Luftgeräts (3) mittels eines Adapterteils (14) verbindbar ist.

5. Ausrüstung (4) gemäß Anspruch 4, wobei das Adapterteil (14) einen Klemmring (141) aufweist, dessen äußerer Durchmesser bis aufs Spiel dem inneren Durchmesser des äußeren Leitungsabschnitts (34) des thermodynamischen Luftgeräts (3) entspricht.

6. Ausrüstung (4) gemäß Anspruch 5, wobei das Adapterteil (14) mindestens ein hervorstehendes Organ (142) aufweist, das sich auf der äußeren Oberfläche des Klemmrings (141) hervorstehend erstreckt, und wobei der äußere Leitungsabschnitt (34) des thermodynamischen Luftgeräts (3) einen Längsspalt (342) aufweist, der sich von seinem freien Ende (341) aus entlang einer zu seiner Achse parallelen Mantellinie erstreckt, wobei das hervorstehende Organ (142) des Adapterteils (14) dazu ausgelegt ist, beim Zusammenfügen der äußeren Leitung (34) des thermodynamischen Luftgeräts (3) mit dem Adapterteil (14) durch Ineinanderstecken in den Längsspalt (342) einzutreten.

7. Ausrüstung (4) gemäß Anspruch 6 mit einem äußeren Kranz (143),
wobei das hervorstehende Organ (142) zwischen die äußere Oberfläche des Klemmrings (141) des Adapterteils (14) und den konzentrischen äußeren Kranz (143) gesetzt ist, wobei der Raum zwischen der äußeren Oberfläche des Klemmrings (141) des Adapterteils (14) und dem konzentrischen äußeren Kranz (143) zum Durchlassen des äußeren Leitungsabschnitts (34) des thermodynamischen Luftgeräts (3) ausgelegt ist,
und wobei eine Rohrschelle (144) auf dem konzentrischen äußeren Kranz (143) angeordnet ist, um das Festklemmen des äußeren Leitungsabschnitts (34) des thermodynamischen Luftgeräts (3) auf dem Klemmring (141) des Adapterteils (14) zu ermöglichen.

8. Ausrüstung (4) gemäß einem der Ansprüche 4 bis 7, wobei das Adapterteil (14) einen abnehmbaren Stopfen (145) aufweist, der geeignet ist, die Öffnung des quer verlaufenden Teils (62) des Systems aus konzentrischen Kanalisationen, die sich auf der Seite des thermodynamischen Luftgeräts (3) befindet, zu verschließen.

9. Ausrüstung (4) gemäß Anspruch 8 in Abhängigkeit von Anspruch 7, wobei der abnehmbare Stopfen (145) mittels einer flexiblen Verbindung am konzentrischen äußeren Kranz (143) des Adapterteils (14) befestigt ist.

10. Ausrüstung (4) gemäß einem der Ansprüche 1 bis 9, wobei der oder einer der Anschlußabschnitte (62) des Systems aus konzentrischen Kanälen dazu ausgelegt ist, durch eine Öffnung (O) einer Trennwand (T) zu gehen, die den Raum (P) begrenzt, in dem das thermodynamische Luftgerät (3) angeordnet ist, wobei der Anschlußabschnitt (62) ein Endstück aufweist, das abgeschnitten werden kann, damit das innere Rohr (72) aus der Innenseite (I) der auf der Seite des thermodynamischen Luftgeräts (3) liegenden Trennwand (T) um eine Länge hervorsteht, die an die Position eines die Luftaustrittsöffnung (32) des thermodynamischen Luftgeräts (3) verlängernden inneren Leitungsabschnitts (33) angepaßt ist, und damit sein äußerer Rohrabschnitt (92) über die Innenseite (I) der Trennwand (T) leicht überstehend angeordnet ist, wobei ein Zierkranz (15) in Form einer durch Verschieben beweglichen Rosette am äußeren Rohrabschnitt (92) befestigt ist, um den Umfang der Wandöffnung (O) zu verschließen.

11. Ausrüstung (4) gemäß einem der Ansprüche 1 bis 10, wobei das Flüssigkeitsauffangsystem (12)
- einen zylindrischen inneren Klemmring (121), der dazu ausgelegt ist, in das untere Ende des inneren Rohrs (71) des senkrechten Teils (61) des Systems aus konzentrischen Kanalisationen hineingesteckt zu werden, wobei der innere Klemmring (121) mit einer Verschlußwand (122) versehen ist, die ein einer beweglichen Verschlußkugel (124) zugeordnetes Durchgangsloch (123) für Flüssigkeit aufweist, und
- einen zylindrischen äußeren Klemmring (125), der dazu ausgelegt ist, in das untere Ende des äußeren Rohrs (91) des senkrechten Teils (61) des Systems aus konzentrischen Kanalisationen hineingesteckt zu werden, wobei der äußere Klemmring (125) mit einer Verschlußwand (122) versehen ist, die mit einem Durchgangsloch (127) für Flüssigkeit versehen ist, wobei das Durchgangsloch (127) für Flüssigkeit durch eine Sammelvorrichtung (128), zum Beispiel in Form eines Siphons, verlängert ist,
aufweist.

12. Ausrüstung (4) gemäß Anspruch 11, wobei die Verschlußwand (122) des inneren Klemmrings (121) und die Verschlußwand (126) des äußeren Klemmrings (125) eine konische Form haben, deren nach unten gerichtete Spitze das zugeordnete Durchgangsloch (123, 127) für Flüssigkeit aufweisen.

13. Ausrüstung (4) gemäß einem der Ansprüche 11 oder 12, wobei die Verschlußwand (122) des inneren Klemmrings (121) eine Wandstruktur (122a) für die zugeordnete Verschlußkugel (124) aufweist, wobei die Wandstruktur (122a) mit Öffnungen oder Durchbrüchen (122b) versehen ist.

14. Ausrüstung (4) gemäß einem der Ansprüche 1 bis 13, wobei die Abschlußhaube (11)
- ein volles Verlängerungsrohr (111), das mit einem Einsteckteil (1111) für dessen Einstecken in das obere Ende (711) des inneren Rohrs (71) des senkrechten Teils (61) des Systems aus konzentrischen Kanalisationen versehen ist,
- ein rohrförmiges Verlängerungsorgan (112), das konzentrisch um das Verlängerungsrohr (111) herum angeordnet ist, wobei das rohrförmige Verlängerungsorgan (112) mit einem Einsteckteil (1121) für dessen Einstecken in das obere Ende (911) des äußeren Rohrs (91) des senkrechten Teils (61) des Systems aus konzentrischen Kanalisationen versehen ist,
aufweist,
wobei sich das rohrförmige Verlängerungsorgan (112) in Bezug auf das freie Ende des Verlängerungsrohrs (111) bis auf eine höhere Ebene erstreckt, wobei das obere Ende des rohrförmigen Verlängerungsorgans (112) mit einer horizontalen oberen Abdeckplatte (113) versehen ist und eine horizontale Zwischenplatte (114) unterhalb des oberen Endes des Verlängerungsrohrs (111) angeordnet ist, wobei die Zwischenplatte (114) den Raum zwischen dem Verlängerungsrohr (111) und dem rohrförmigen Verlängerungsorgan (112) abschließt,
wobei das rohrförmige Verlängerungsorgan (112) (i) eine Anzahl unterhalb der Zwischenplatte (114) angeordneter Öffnungen (112a) zum Sicherstellen der Luftzufuhr zu den thermodynamischen Luftgeräten (3) und (ii) eine Anzahl oberhalb der Zwischenplatte (114) angeordneter Öffnungen (112b) zum Sicherstellen des Abführens der von den thermodynamischen Luftgeräten (3) kommenden Luft nach draußen aufweist.

15. Ausrüstung (4) gemäß Anspruch 14, wobei die obere Platte (113) und die Zwischenplatte die Form einer Scheibe haben, deren Durchmesser größer als der Durchmesser des rohrförmigen Verlängerungsorgans (112) ist.

16. Installation zum Erzeugen von Warmluft/Kaltluft oder warmem Wasser für eine Wohnstruktur (1) mit
a) mindestens einem thermodynamischen Luftgerät (3) vom Typ eines thermodynamischen Wasserboilers (CET) oder einer Wärmepumpe (PAC) und
b) einer Ausrüstung (4) zum Anschließen mindestens eines thermodynamischen Luftgeräts (3) an die Außenluft gemäß einem der Ansprüche 1 bis 15.

## Claims

1. A device (4) for connecting to the outside air an air-source thermodynamic appliance (3), such as a thermodynamic water heater (TWH) or a heat pump (HP), designed to fit a residential structure (1), the device comprising a system (6) of concentric pipes,
said air-source thermodynamic appliance (3) comprising an air discharge opening (32) and an air intake opening (31), said air intake opening (31) being concentric to said air discharge opening (32) and located around the latter,
said air intake opening (31) and air discharge opening (32) of said air-source thermodynamic appliance (3) being suitable to be connected to the outside air through said concentric pipe system (6), this concentric pipe system (6) comprising an inner piping (7) in communication with the outside air via an air outlet (8) and configured to communicate with said air discharge opening (32) of said air-source thermodynamic appliance (3), and an outer piping (9) in communication with the outside air via an air inlet (10) and configured to communicate with said air intake opening (31) of said air-source thermodynamic appliance (3),
said concentric pipe system (6) comprising:
- a concentric pipe system vertical portion (61), the upper end (611) of which comprising an end cap (11) located outside the residential structure (1), said end cap (11) comprising said air outlet (8) and air inlet (10), and
- a potential concentric pipe system transverse portion (62), which connects said air-source thermodynamic appliance (3) to said concentric pipe system vertical portion (61), said concentric pipe system transverse portion (62) having a downward slope from the air-source thermodynamic appliance (3) towards said concentric pipe system vertical portion (61),
said device (4) being **characterized in that** said concentric pipe system vertical portion (61) is consisted of a juxtaposition of sections of concentric pipe system vertical portion (613a, 613b) comprising male/female end portions (711, 712; 911, 912) for their fitting together, the lower end (612) of said concentric pipe system (6) comprising a liquid recovery device (12),
**in that** said potential concentric pipe system transverse portion (62) comprises at least one connecting section (621, 622) suitable for fitting to said concentric pipe system vertical portion (61),
and **in that**:
- the inner piping section (71) of said concentric pipe system vertical portion sections (613a, 613b) and the inner piping section (72) of said at least one connecting section (621, 622) of said potential concentric pipe system transverse portion (62) have an end located at the highest point, called upper end (711, 721), which is of the male type, and an end located at the lowest point, called lower end (712, 722), which is of the female type, and
- the outer piping section (91) of said concentric pipe system vertical portion sections (613a, 613b) and the outer piping section (92) of said at least one connecting section (621, 622) of said potential concentric pipe system transverse portion (62) have an end located at the highest point, called upper end (911, 921), which is of the female type, and an end located at the lowest point, called lower end (912, 922), which is of the male type.

2. The device (4) according to claim 1, for connecting to the outside air a plurality of air-source thermodynamic appliances (3), such as a thermodynamic water heater (TWH) or a heat pump (HP), said air-source thermodynamic appliances (3) being arranged over several levels, each in one room (P) of a residential structure (1) in the form of a collective building comprising a vertical service shaft (5),
the device comprising a concentric pipe system (6),
each of said air-source thermodynamic appliances (3) comprising an air discharge opening (32) and an air intake opening (31), said air intake opening (31) being concentric to said air discharge opening (32) and located around the latter,
said air intake opening (31) and air discharge opening (32) of the air-source thermodynamic appliances (3) being suitable to be connected to the outside air through said concentric pipe system (6), this concentric pipe system (6) comprising an inner piping (7) in communication with the outside air via an air outlet (8) and configured to communicate with said air discharge openings (32) of the air-source thermodynamic appliances (3), and an outer piping (9) in communication with the outside air via an air inlet (10) and configured to communicate with said air intake openings (31) of the air-source thermodynamic appliances (3),
said concentric pipe system (6) comprising:
- a concentric pipe system vertical portion (61) placed at least in part inside said vertical service shaft (5), the upper end (611) of said concentric pipe system vertical portion (61) comprising an end cap (11) located outside said service shaft (5), said end cap (11) comprising said air outlet (8) and air inlet (10), and
- concentric pipe system transverse portions (62), connecting each of said air-source thermodynamic appliances (3) to said concentric pipe system vertical portion (61), said concentric pipe system transverse portions (62) having a downward slope from the air-source thermodynamic appliance (3) towards said concentric pipe system vertical portion (61),
said device (4) being **characterized in that** said concentric pipe system vertical portion (61) is consisted of a juxtaposition of sections of concentric pipe system vertical portion (613a, 613b) comprising male/female end portions (711, 712; 911, 912) for their fitting together, its lower end (612) comprising a liquid recovery device (12),
**in that** said concentric pipe system transverse portions (62) each comprise (i) a connecting tap (621) integral with a concentric pipe system vertical portion section (613a), said connecting tap (621) being centred to an upward-sloping axis from said concentric pipe system vertical portion section (613a), and (ii) at least one connecting section (622) suitable for fitting said connecting tap (621) to said air-source thermodynamic appliance (3),
and **in that**:
- the inner piping section (71) of said concentric pipe system vertical portion sections (613a, 613b) and the outer piping section (72) of said connecting sections (621, 622) of said concentric pipe system transverse portions (62) have an end located at the highest point, called upper end (711, 721), which is of the male type, and an end located at the lowest point, called lower end (712, 722), which is of the female type, and
- the outer piping section (91) of said concentric pipe system vertical portion sections (613a, 613b) and the outer piping section (92) of said connecting sections (621, 622) of said concentric pipe system transverse portions (62) have an end located at the highest point, called upper end (911, 921), which is of the female type, and an end located at the lowest point, called lower end (912, 922), which is of the male type.

3. The device (4) according to any one of claims 1 or 2, **characterized in that** the inner piping section (71) of said concentric pipe system vertical portion sections (613a, 613b) and possibly the inner piping section (72) of the sections (621, 622) of said concentric pipe system transverse portions (62) are made of a material with a low thermal conductivity, e.g. a polypropylene-type plastic material,
**in that** the outer piping section (91) of said concentric pipe system vertical portion sections (613a, 613b) and possibly the outer piping section (92) of the sections (621, 622) of said concentric pipe system transverse portions (62) are made of metal, e.g. stainless steel,
and **in that** centring elements (13) ensure the spacing between said inner and outer piping sections (71, 72), said centring elements (13) comprising a clamp collar (131) for their clamping around said inner piping section (71), said clamp collar (131) being provided with at least two metal spacing members (132) adapted to be welded to said outer piping section (91).

4. The device (4) according to any one of claims 1 to 3, suitable to be connected to at least one air-source thermodynamic appliance (3) comprising an inner duct section (33) extending its air discharge opening (32), and an outer duct section (34) extending its air intake opening (31), provided with a free end (341), **characterised in that** said outer piping section (92) of said at least one connecting section (621, 622) of the concentric pipe system transverse portion (62) is suitable to be connected to said free end (341) of the outer duct section (34) of said at least one air-source thermodynamic appliance (3) through an adapter part (14).

5. The device (4) according to claim 4, **characterized in that** said adapter part (14) comprises a ferrule (141) whose outer diameter corresponds, to within the clearance, to the inner diameter of the outer piping (92) of said connecting section (62) and to the inner diameter of the outer duct section (34) of the air-source thermodynamic appliance (3).

6. The device (4) according to claim 5, **characterized in that** said adapter part (14) comprises at least one protruding member (142) extending in protrusion on the external surface of said ferrule (141), and **in that** said outer duct section (34) of the air-source thermodynamic appliance (3) comprises a longitudinal slot (342) that extends along a generating line parallel to its axis, from its free end (341), said longitudinal slot (342) being adapted to the passage of said protruding member (142) of said adapter part (14), during the fitting assembly of said outer duct (34) of the air-source thermodynamic appliance (3) and said adapter part (14).

7. The device (4) according to claim 6, **characterized in that** said at least one protruding member (142) is interposed between the external surface of the ferrule (141) of the adapter part (14) and a concentric external ring (143), the space between said external surface of the ferrule (141) of the adapter part (14) and said concentric external ring (143) being adapted to the passage of said outer duct section (34) of the air-source thermodynamic appliance (3),
and a clamp collar (144) being formed on said concentric external crown (143) for clamping said outer duct section (34) of the air-source thermodynamic appliance (3) against said ferrule (141) of the adapter part (14).

8. The device (4) according to any one of claims 4 to 7, **characterized in that** said adapter part (14) comprises a removable plug (145) suitable for sealing the opening of the concentric pipe system transverse portion (62) which is located on the side of the air-source thermodynamic appliance (3).

9. The device (4) according to claim 8, when depending on claim 7, **characterized in that** said removable plug (145) is attached to said concentric external ring (143) of the adapter part (14) through a flexible tie (146).

10. The device (4) according to any one of claims 1 to 9, **characterized in that** the or one of the connecting sections (62) of the concentric pipe system is suitable for passing through an opening (O) of a partitioning wall (T) delimiting the room (P) in which the air-source thermodynamic appliance (3) is installed, said connecting section (62) comprising an end portion suitable to be cut, in such a way that the inner piping (72) thereof protrudes from the internal face (I) of said partitioning wall (T) located on the side of the air-source thermodynamic appliance (3), by a length suitable for the positioning of an inner duct section (33) extending the air discharge opening (32) of the air-source thermodynamic appliance (3), and in such a way that the outer piping (92) thereof slightly protrudes from said inner face (I) of the partitioning wall (T), an finishing ring (15) in the form of a sliding rosette mounted on said outer piping (92) to seal the perimeter of said wall opening (O).

11. The device (4) according to any one of claims 1 to 10, **characterized in that** said liquid recovery device (12) comprises:
- a cylindrical inner ferrule (121) suitable for fitting to the lower end of the inner piping (71) of the concentric pipe system vertical portion (61), said inner ferrule (121) being provided with a sealing wall (122) comprising a liquid-passage hole (123) associated with a removable sealing ball (124), and
- a cylindrical outer ferrule (125) suitable for fitting to the lower end of the outer piping (91) of the concentric pipe system vertical portion (61), said outer ferrule (125) being provided with a sealing wall (126) provided with a liquid-passage hole (127), said liquid-passage hole (127) being extended by a collection device (128), for example in the form of a siphon.

12. The device (4) according to claim 11, **characterized in that** said sealing wall (122) of the inner ferrule (121) and said sealing wall (126) of the outer ferrule (125) have a conical shape the top of which, directed downwards, includes the associated liquid-passage hole (123, 127).

13. The device (4) according to any one of claims 11 or 12, **characterized in that** said sealing wall (122) of the inner ferrule (121) includes a partitioning structure (122a) for the associated sealing ball (124), said partitioning structure (122a) being provided with openings or perforations (122b).

14. The device (4) according to any one of claims 1 to 13, **characterized in that** said end cap (11) comprises:
- a solid extension tube (111) provided with a fitting portion (1111) for its fitting to the upper end (711) of the inner piping (71) of the concentric pipe system vertical portion (61),
- an extension tubular member (112) arranged concentrically around said extension tube (111), said extension tubular member (112) being provided with a fitting portion (1121) for its fitting to the upper end (911) of the outer piping (91) of the concentric pipe system vertical portion (61),
said extension tubular member (112) extending up to an upper level with respect to the free end of said extension tube (111), the upper end of said extension tubular member (112) being equipped with an upper horizontal covering plate (113), and an intermediate horizontal plate (114) located under the upper end of said extension tube (111), said intermediate plate (114) partitioning the space between said extension tube (111) and said extension tubular member (112),
said extension tubular member (112) including (i) a plurality of openings (112a) arranged below said intermediate plate (114) for supplying air to the air-source thermodynamic appliances (3), and (ii) a plurality of openings (112b) arranged above said intermediate plate (114) for discharging to the outside the air coming from the air-source thermodynamic appliances (3).

15. The device (4) according to claim 14, **characterized in that** said upper plate (113) and said intermediate plate (114) are in the form of a disk whose diameter is greater than the diameter of the extension tubular member (112).

16. Hot/cold air or hot water production system for a residential structure (1) comprising:
a) at least one air-source thermodynamic appliance (3), such as a thermodynamic water heater (TWH) or a heat pump (HP), and
b) a device (4) for connecting to the outside air said at least one air-source thermodynamic appliance (3), according to any one of claims 1 to 15.
